# EUROPEAN PATENT APPLICATION

(11) **EP 4 625 282 A1**
(43) Date of publication of application: **01.10.2025**
(21) Application number: 23933453.5
(22) Date of filing: 20.04.2023
(51) Int. Cl.: G06Q 10/0631

(54) **METHOD AND APPARATUS FOR DISTRIBUTING RESOURCE INFORMATION**

(71) Applicant: Contemporary Amperex Technology Co., Limited, Ningde, Fujian 352100 (CN)
(72) Inventor: ZHANG, Zhixiang, Ningde, Fujian 352100 (CN); YANG, Haiguang, Ningde, Fujian 352100 (CN); ZHANG, Xiaolin, Ningde, Fujian 352100 (CN); WANG, Jian, Ningde, Fujian 352100 (CN)
(74) Representative: Herrmann, Uwe
(86) International application number: PCT/CN2023/089470
(87) International publication number: WO 2024/216577

(57) **Abstract**

Embodiments of the present application provide a method and apparatus for publishing resource information. The method includes: acquiring battery swapping demand information of at least one battery swapping station and station information of the at least one battery swapping station; generating resource information according to the battery swapping demand information of the at least one battery swapping station and the station information of the at least one battery swapping station; and publishing the resource information. According to the method and apparatus for publishing resource information provided by the embodiments of the present application, the publishing of resource information is more diversified, different requirements of users and operators can be met as much as possible, the utilization rate of a battery swapping station is improved, and the user experience is improved.

## Description

### TECHNICAL FIELD

The present application relates to the technical field of battery swapping, and particularly relates to a method and apparatus for publishing resource information.

### BACKGROUND

Energy conservation and emission reduction are the key to sustainable development of automotive industry. Electric vehicles have become an important part in the sustainable development of the automotive industry due to their advantages of energy saving and environmental protection. For the electric vehicles, battery swapping technology is an important factor related to development.

At present, swapping a battery of the electric vehicle in a battery swapping station can quickly replenish the energy of the electric vehicle that is insufficient in energy, and thus the battery can be prevented from being charged for a long time. However, due to limited battery resources of the battery swapping station, it may not be able to meet the requirement of users on battery swapping, which reduces user experience.

### SUMMARY OF THE INVENTION

Embodiments of the present application provides a method and apparatus for publishing resource information. By the method and apparatus for publishing resource information, the publishing of resource information is more diversified, different requirements of users and operators can be met as much as possible, the utilization rate of battery resources of a battery swapping station is improved, and the user experience is improved.

In a first aspect, provided is a method for publishing resource information, and the method includes: acquiring battery swapping demand information of at least one battery swapping station and station information of the at least one battery swapping station; generating resource information according to the battery swapping demand information of the at least one battery swapping station and the station information of the at least one battery swapping station; and publishing the resource information.

In the embodiments of the present application, according to the battery swapping demand information of the at least one battery swapping station and the station information of the at least one battery swapping station, more diversified resource information can be determined, thus the resource information can be published from different dimensions, the battery swapping demand of the user and the operation demand of a battery swapping station operator can be met as much as possible, the utilization rate of battery resources of the battery swapping station is improved, and the user experience is improved.

In a possible embodiment, the battery swapping demand information of the at least one battery swapping station includes the demand information of vehicles to be subjected to battery swapping of the at least one battery swapping station, and the demand information includes at least one selected from the group consisting of: quantity information of batteries in demand, model information of batteries in demand, SOC information of batteries in demand, SOH information of batteries in demand, capacity information of batteries in demand or size information of batteries in demand.

In the embodiments of the present application, the demand information of the vehicles to be subjected to battery swapping of the battery swapping station includes at least one selected from the group consisting of: the quantity information of the batteries in demand, the model information of the batteries in demand, the SOC information of the batteries in demand, the SOH information of the batteries in demand, the capacity information of the batteries in demand or the size information of the batteries in demand, and therefore, the resource information can be generated and published in a targeted manner based on at least one of the information such as the quantity, model, SOC, SOH, capacity or size of the batteries in demand, which meets the battery swapping demand of the user as much as possible, and improves the user experience.

In a possible embodiment, the station information of the at least one battery swapping station includes at least one selected from the group consisting of: location information of the at least one battery swapping station, quantity information of the batteries of the at least one battery swapping station, model information of the batteries of the at least one battery swapping station, SOC information of the batteries of the at least one battery swapping station, SOH information of the batteries of the at least one battery swapping station, capacity information of the batteries of the at least one battery swapping station or size information of the batteries of the at least one battery swapping station.

In the embodiments of the present application, the station information of the battery swapping station includes the location information, battery quantity information, battery model information, battery SOC information, battery SOH information, battery capacity information or battery size information of the battery swapping station, and therefore, the resource information can be generated and published in a targeted mode based on at least one of the information such as location, battery quantity, battery model, battery SOC, battery SOH, battery capacity or battery size of the battery swapping station, which can improve the utilization rate of the battery resources of the battery swapping station, meet the battery swapping demand of the user as much as possible, and improve the user experience.

In a possible embodiment, the method includes: acquiring historical battery swapping information of the at least one battery swapping station; and determining predicted battery swapping demand information of the at least one battery swapping station according to the historical battery swapping information.

In the embodiments of the present application, the battery swapping demand information of the battery swapping station can be predicted more accurately according to the historical battery swapping information of the battery swapping station, so that the resource information can be generated and published in advance based on the predicted battery swapping demand information of the battery swapping station, the battery swapping load capacity of the battery swapping station can be shunted in advance to a certain extent, thereby reducing congestion in battery swapping during the battery swapping process.

In a possible embodiment, the method includes: acquiring the information of queued vehicles to be subjected to battery swapping or information of queued batteries to be subjected to battery swapping of the at least one battery swapping station; and according to the information of the queued vehicles to be subjected to battery swapping or the information of the queued batteries to be subjected to battery swapping, determining real-time battery swapping demand information of the at least one battery swapping station.

In the embodiments of the present application, according to the information of the queued vehicles to be subjected to battery swapping or the information of the queued batteries to be subjected to battery swapping, the real-time battery swapping demand information can be determined more accurately, and thus the resource information can be generated more accurately based on the battery swapping demand information of the battery swapping station.

In a possible embodiment, the method includes: acquiring controller address of the vehicles within a preset range of the at least one battery swapping station; and determining the vehicles to be the queued vehicles to be subjected to battery swapping based on the controller address.

In the embodiments of the present application, according to the controller address of the vehicles within the preset range of the battery swapping station, the vehicles to be subjected to battery swapping within the preset range of the battery swapping station can be determined more accurately, so that real-time battery swapping demand information of the battery swapping station can be determined more accurately according to the information of the vehicles to be subjected to battery swapping.

In a possible embodiment, the method includes: receiving battery swapping reservation request information of the at least one battery swapping station, in which, the request information includes information of reserved vehicles to be subjected to battery swapping or battery information of the reserved vehicles to be subjected to battery swapping; and determining the battery swapping demand information in reservation of the at least one battery swapping station according to the request information.

In the embodiments of the present application, the battery swapping demand information in reservation of the battery swapping station can be determined more accurately according to the battery swapping reservation request information of the battery swapping station, so that resource information can be more accurately generated according to the battery swapping demand information in reservation.

In a possible embodiment, the resource information includes battery swapping waiting time information, recommended battery swapping time information, recommended battery swapping station information, battery swapping cost adjustment information or battery resource scheduling information.

In the embodiments of the present application, the generated resource information may include information of different dimensions, further, the resource information can be published based on different dimensions, so that the shunting effect on the battery swapping station can be achieved through different dimensions, the requirements of the users and operators can be met as much as possible, the utilization rate of the battery swapping station is improved, and the user experience is improved.

In a possible embodiment, the publishing the resource information includes: transmitting the battery swapping waiting time information of the at least one battery swapping station to the vehicles to be subjected to battery swapping, in which, the vehicles to be subjected to battery swapping include the queued vehicles to be subjected to battery swapping, the reserved vehicles to be subjected to battery swapping, historical battery swapping vehicles or registered vehicles of the at least one battery swapping station.

In the embodiments of the present application, the battery swapping waiting time of the at least one battery swapping station can be transmitted to the vehicles to be subjected to battery swapping, which facilitates the users to select whether to wait for battery swapping or to select the battery swapping station for battery swapping according to demands, and thus the user experience can be improved. On the other hand, the battery swapping load capacity of the battery swapping station with high busyness can also be reduced as much as possible through the selection of the user.

In a possible embodiment, the generating resource information according to the battery swapping demand information of the at least one battery swapping station and the station information of the at least one battery swapping station includes: according to the battery swapping demand information of the at least one battery swapping station and the station information of the at least one battery swapping station, determining time information corresponding to that the busyness of the at least one battery swapping station is less than or equal to a preset busyness threshold; and according to the time information corresponding to that the busyness of the at least one battery swapping station is less than the preset busyness threshold, generating the recommended battery swapping time information of the at least one battery swapping station.

In the embodiments of the present application, according to the battery swapping demand information of the at least one battery swapping station and the station information of the at least one battery swapping station, the time information corresponding to that the busyness of the at least one battery swapping station is less than or equal to the preset busyness threshold can be determined, and further, the recommended battery swapping time of the at least one battery swapping station can be determined reasonably according to the corresponding time.

In a possible embodiment, the publishing the resource information includes: transmitting the recommended battery swapping time information of the at least one battery swapping station to the vehicles to be subjected to battery swapping, in which, the vehicles to be subjected to battery swapping include the queued vehicles to be subjected to battery swapping, the reserved vehicles to be subjected to battery swapping, the historical battery swapping vehicles or the registered vehicles of the at least one battery swapping station.

In the embodiments of the present application, the recommended battery swapping time information of the at least one battery swapping station can be transmitted to the vehicles to be subjected to battery swapping, so that the users can select a proper battery swapping time to the battery swapping station for battery swapping on the basis of requirements, which can reduce the battery swapping waiting time of the users in the battery swapping station, and improve the user experience. On the other hand, the battery swapping load capacity of the battery swapping station with high busyness can also be reduced to a certain degree through the selection of the user.

In a possible embodiment, the generating resource information according to the battery swapping demand information of the at least one battery swapping station and the station information of the at least one battery swapping station includes: according to the battery swapping demand information of the at least one battery swapping station and the station information of the at least one battery swapping station, determining the battery swapping expense information of the vehicles to be subjected to battery swapping in the at least one battery swapping station, in which, the battery swapping expense information includes the expense information of battery swapping time and the expense information of battery swapping cost; and generating the recommended battery swapping station information according to the battery swapping expense information.

In the embodiments of the present application, according to the battery swapping demand information of the at least one battery swapping station and the station information of the at least one battery swapping station, the expense information of the battery swapping time and battery swapping cost of the vehicles to be subjected to battery swapping in the at least one battery swapping station can be determined, and then the recommended battery swapping station information can be determined more reasonably according to the expense information of the battery swapping time and battery swapping cost.

In a possible embodiment, the recommended battery swapping station information includes the information of the battery swapping station with the minimum battery swapping time and/or the information of the battery swapping station with the minimum battery swapping cost.

In the embodiments of the present application, by generating the information of the battery swapping station with the minimum battery swapping time and/or the information of the battery swapping station with the minimum battery swapping cost, the data cost in the generation of the recommended battery swapping station information can be decreased. Moreover, the users can quickly acquire the recommended battery swapping station information, thus improving the user experience.

In a possible embodiment, the publishing the resource information includes: transmitting the recommended battery swapping station information to the vehicles to be subjected to battery swapping, in which, the vehicles to be subjected to battery swapping include the queued vehicles to be subjected to battery swapping, the reserved vehicles to be subjected to battery swapping, the historical battery swapping vehicles or the registered vehicles of the at least one battery swapping station.

In the embodiments of the present application, by transmitting the recommended battery swapping station information to the vehicles to be subjected to battery swapping, the users can select the battery swapping station according to demands conveniently, thus the effect of guiding the users to the recommended battery swapping station can be achieved, and the battery swapping load capacity among the battery swapping stations is balanced. Moreover, the recommended battery swapping station information is transmitted to the vehicles to be subjected to battery swapping, which facilitates the users to select the battery swapping station according to demands, thus improving the user experience.

In a possible embodiment, the generating resource information according to the battery swapping demand information of the at least one battery swapping station and the station information of the at least one battery swapping station includes: according to the battery swapping demand information of the at least one battery swapping station and the station information of the at least one battery swapping station, determining resource publishing information, in which, the resource publishing information includes a battery resource publishing thermodynamic chart of the at least one battery swapping station and/or the busyness information of the at least one battery swapping station; and generating battery swapping cost adjustment information of the at least one battery swapping station according to the resource publishing information.

In the embodiments of the present application, according to the battery swapping demand information of the at least one battery swapping station and the station information of the at least one battery swapping station, the resource publishing information of the at least one battery swapping station can be determined, and then the battery swapping cost of the battery swapping station can be adjusted more reasonably according to the resource publishing information of the at least one battery swapping station. By adjusting the battery swapping cost of the battery swapping station, the selection of the user for the battery swapping station can be adjusted to a certain extent, and therefore, the battery swapping load capacity of the battery swapping station can be adjusted.

In a possible embodiment, the generating battery swapping cost adjustment information of the at least one battery swapping station according to the resource publishing information includes: under the condition that the busyness of the at least one battery swapping station is greater than or equal to the preset busyness threshold, determining to increase the battery swapping cost of the at least one battery swapping station.

In the embodiments of the present application, under the condition that the battery swapping station is high in busyness, the battery swapping cost of the battery swapping station can be increased, therefore, the quantity of the vehicles to be subjected to battery swapping in this battery swapping station can be reduced to a certain extent, further, the busyness of the battery swapping station is reduced, and the balance degree of the battery swapping load capacity among the battery swapping stations is increased.

In a possible embodiment, the generating battery swapping cost adjustment information of the at least one battery swapping station according to the resource publishing information includes: under the condition that the busyness of the at least one battery swapping station is less than or equal to the preset busyness threshold, determining to decrease the battery swapping cost of the at least one battery swapping station.

In the embodiments of the present application, under the condition that the busyness of the battery swapping station is low, the battery swapping cost of the battery swapping station can be decreased, so that the quantity of the vehicles to be subjected to battery swapping at this battery swapping station can be increased to a certain extent, further, the busyness of the battery swapping station can be increased, and the balance degree of the battery swapping load capacity among the battery swapping stations can be increased.

In a possible embodiment, the publishing the resource information includes: transmitting the battery swapping cost adjustment information of the at least one battery swapping station to the vehicles to be subjected to battery swapping, in which, the vehicles to be subjected to battery swapping include the queued vehicles to be subjected to battery swapping, the reserved vehicles to be subjected to battery swapping, the historical battery swapping vehicles or the registered vehicles of the at least one battery swapping station.

In the embodiments of the present application, the battery swapping cost adjustment information of the at least one battery swapping station can be transmitted to the vehicles to be subjected to battery swapping, thus the users can conveniently select the battery swapping station for battery swapping according to the demands, the battery swapping cost of the users can be reduced, and the user experience can be improved. On the other hand, by adjusting the battery swapping cost, the adjustment effect on the busyness of the battery swapping station can be achieved to a certain extent, so that the balance degree of the battery swapping load capacity among the battery swapping stations can be increased.

In a possible embodiment, the generating resource information according to the battery swapping demand information of the at least one battery swapping station and the station information of the at least one battery swapping station includes: according to the battery swapping demand information of the at least one battery swapping station and the station information of the at least one battery swapping station, determining the resource publishing information, in which, the resource publishing information includes the battery resource publishing thermodynamic chart of the at least one battery swapping station and/or the busyness information of the at least one battery swapping station; and generating battery resource scheduling information of the at least one battery swapping station according to the resource publishing information.

In the embodiments of the present application, according to the battery swapping demand information of the at least one battery swapping station and the station information of the at least one battery swapping station, the resource publishing information can be determined; and then the battery resource scheduling information of the at least one battery swapping station can be determined more reasonably according to the resource publishing information, so that the utilization rate of the battery resources in the battery swapping station can be increased, and the user experience can be improved.

In a possible embodiment, the generating battery resource scheduling information of the at least one battery swapping station according to the resource publishing information includes: under the condition that the busyness of the at least one battery swapping station is greater than or equal to the preset busyness threshold, determining to schedule the batteries of a target battery swapping station to the at least one battery swapping station, in which, the target battery swapping station includes a battery swapping station near the at least one battery swapping station.

In the embodiments of the present application, the batteries of other power stations around the battery swapping station with high busyness can be scheduled to the battery swapping station with high busyness, thus the busyness of the battery swapping station with high busyness can be decreased, the battery swapping waiting time of the users can be reduced, and the user experience is improved. On the other hand, the utilization rate of the battery resources of the target battery swapping station can be increased.

In a possible embodiment, before determining to schedule the batteries of a target battery swapping station to the at least one battery swapping station, the method further includes: according to the station information of the at least one battery swapping station, determining distance information or running time information between the at least one battery swapping station and the battery swapping station near the at least one battery swapping station, in which, the station information of the at least one battery swapping station includes the location information of the at least one battery swapping station; and under the condition that the distance information is within a preset distance range or the running time information is within a preset time range, determining the battery swapping station nearby to be the target battery swapping station.

In the embodiments of the present application, according to the location information of the battery swapping stations, the distance information or the running time information between the battery swapping stations can be determined, further, the target battery swapping station with the distance information within the preset distance range or the running time information within the preset time range can be determined, thus the cost and/or the time for battery resource scheduling can be reduced, accordingly the resource scheduling cost can be reduced, and the battery swapping waiting time of the users can be decreased.

In a possible embodiment, the battery swapping demand information of the at least one battery swapping station and the station information of the at least one battery swapping station are the battery swapping demand information and the station information of the same battery swapping station.

In the embodiment of the present application, by acquiring the battery swapping demand information and the station information of the same battery swapping station, the resource information of the battery swapping station can be determined, and thus different demands of the users and operators on the battery swapping station can be met as much as possible.

In a possible embodiment, the battery swapping demand information of at least one battery swapping station and the station information of the at least one battery swapping station are the battery swapping demand information and the station information of different battery swapping stations.

In the embodiments of the present application, by acquiring the battery swapping demand information of one battery swapping station and the station information of another battery swapping station, the resource information of the one battery swapping station or the another battery swapping station can be determined, and thus different demands of the users and operators on the one battery swapping station or the another battery swapping station can be met as much as possible.

In a second aspect, provided is an apparatus for publishing resource information, and the apparatus includes: an acquisition unit configured to acquire battery swapping demand information of at least one battery swapping station and station information of the at least one battery swapping station; a processing unit configured to generate resource information according to the battery swapping demand information of the at least one battery swapping station and the station information of the at least one battery swapping station; and a publishing unit configured to publish the resource information.

In a possible embodiment, the battery swapping demand information of the at least one battery swapping station includes the demand information of vehicles to be subjected to battery swapping of the at least one battery swapping station, and the demand information includes at least one selected from the group consisting of: quantity information of batteries in demand, model information of batteries in demand, SOC information of batteries in demand, SOH information of batteries in demand, capacity information of batteries in demand or size information of batteries in demand.

In a possible embodiment, the station information of the at least one battery swapping station includes at least one selected from the group consisting of: location information of the at least one battery swapping station, quantity information of the batteries of the at least one battery swapping station, model information of the batteries of the at least one battery swapping station, SOC information of the batteries of the at least one battery swapping station, SOH information of the batteries of the at least one battery swapping station, capacity information of the batteries of the at least one battery swapping station or size information of the batteries of the at least one battery swapping station.

In a possible embodiment, the acquisition unit is configured to acquire historical battery swapping information of the at least one battery swapping station; and the processing unit is configured to determine predicted battery swapping demand information of the at least one battery swapping station according to the historical battery swapping information.

In a possible embodiment, the acquisition unit is configured to acquire the information of queued vehicles to be subjected to battery swapping or information of queued batteries to be subjected to battery swapping of the at least one battery swapping station; and the processing unit is configured to: according to the information of the queued vehicles to be subjected to battery swapping or the information of the queued batteries to be subjected to battery swapping, determine real-time battery swapping demand information of the at least one battery swapping station.

In a possible embodiment, the acquisition unit is configured to acquire controller address of vehicles within a preset range of the at least one battery swapping station; and determining the vehicles to be the queued vehicles to be subjected to battery swapping based on the controller address.

In a possible embodiment, the apparatus further includes: a receiving unit configured to receive battery swapping reservation request information of the at least one battery swapping station, in which, the request information includes information of reserved vehicles to be subjected to battery swapping or battery information of the reserved vehicles to be subjected to battery swapping; and the processing unit is configured to determine the battery swapping demand information in reservation of the at least one battery swapping station according to the request information.

In a possible embodiment, the resource information includes battery swapping waiting time information, recommended battery swapping time information, recommended battery swapping station information, battery swapping cost adjustment information or battery resource scheduling information.

In a possible embodiment, the publishing unit is configured to: transmit the battery swapping waiting time information of the at least one battery swapping station to the vehicles to be subjected to battery swapping, in which, the vehicles to be subjected to battery swapping include the queued vehicles to be subjected to battery swapping, the reserved vehicles to be subjected to battery swapping, historical battery swapping vehicles or registered vehicles of the at least one battery swapping station.

In a possible embodiment, the processing unit is configured to: according to the battery swapping demand information of the at least one battery swapping station and the station information of the at least one battery swapping station, determine time information corresponding to that the busyness of the at least one battery swapping station is less than or equal to a preset busyness threshold; and according to the time information corresponding to that the busyness of the at least one battery swapping station is less than a preset busyness threshold, generate the recommended battery swapping time information of the at least one battery swapping station.

In a possible embodiment, the publishing unit is configured to: transmit the recommended battery swapping time information of the at least one battery swapping station to the vehicles to be subjected to battery swapping, in which, the vehicles to be subjected to battery swapping include the queued vehicles to be subjected to battery swapping, the reserved vehicles to be subjected to battery swapping, the historical battery swapping vehicles or the registered vehicles of the at least one battery swapping station.

In a possible embodiment, the processing unit is configured to: according to the battery swapping demand information of the at least one battery swapping station and the station information of the at least one battery swapping station, determine the battery swapping expense information of the vehicles to be subjected to battery swapping at the at least one battery swapping station, in which, the battery swapping expense information includes the expense information of battery swapping time and the cost information of battery swapping expense; and generate the recommended battery swapping station information according to the battery swapping expense information.

In a possible embodiment, the recommended battery swapping station information includes the information of the battery swapping station with the minimum battery swapping time and/or the information of the battery swapping station with the minimum battery swapping cost.

In a possible embodiment, the publishing unit is configured to: transmit the recommended battery swapping station information to the vehicles to be subjected to battery swapping, in which, the vehicles to be subjected to battery swapping include the queued vehicles to be subjected to battery swapping, the reserved vehicles to be subjected to battery swapping, the historical battery swapping vehicles or the registered vehicles of the at least one battery swapping station.

In a possible embodiment, the processing unit is configured to: according to the battery swapping demand information of the at least one battery swapping station and the station information of the at least one battery swapping station, determine resource publishing information, in which, the resource publishing information includes a battery resource publishing thermodynamic chart of the at least one battery swapping station and/or the busyness information of the at least one battery swapping station; and generate the battery swapping cost adjustment information of the at least one battery swapping station according to the resource publishing information.

In a possible embodiment, the processing unit is configured to: under the condition that the busyness of the at least one battery swapping station is greater than or equal to the preset busyness threshold, determine to increase the battery swapping cost of the at least one battery swapping station.

In a possible embodiment, the processing unit is configured to: under the condition that the busyness of the at least one battery swapping station is less than or equal to the preset busyness threshold, determine to decrease the battery swapping cost of the at least one battery swapping station.

In a possible embodiment, the publishing unit is configured to: transmit the battery swapping cost adjustment information of the at least one battery swapping station to the vehicles to be subjected to battery swapping, in which, the vehicles to be subjected to battery swapping include the queued vehicles to be subjected to battery swapping, the reserved vehicles to be subjected to battery swapping, the historical battery swapping vehicles or the registered vehicles of the at least one battery swapping station.

In a possible embodiment, the processing unit is configured to: according to the battery swapping demand information of the at least one battery swapping station and the station information of the at least one battery swapping station, determine the resource publishing information, in which, the resource publishing information includes the battery resource publishing thermodynamic chart of the at least one battery swapping station and/or the busyness information of the at least one battery swapping station; and generate battery resource scheduling information of the at least one battery swapping station according to the resource publishing information.

In a possible embodiment, the processing unit is configured to: under the condition that the busyness of the at least one battery swapping station is greater than or equal to the preset busyness threshold, determine to schedule the batteries of a target battery swapping station to the at least one battery swapping station, in which, the target battery swapping station includes a battery swapping station near the at least one battery swapping station.

In a possible embodiment, before determining to schedule the batteries of a target battery swapping station to the at least one battery swapping station, the processing unit is further configured to: according to the station information of the at least one battery swapping station, determine distance information or running time information between the at least one battery swapping station and the battery swapping station near the at least one battery swapping station, in which, the station information of the at least one battery swapping station includes the location information of the at least one battery swapping station; and under the condition that the distance information is within a preset distance range or the running time information is within a preset time range, determine the battery swapping station nearby to be the target battery swapping station.

In a possible embodiment, the battery swapping demand information of the at least one battery swapping station and the station information of the at least one battery swapping station are the battery swapping demand information and the station information of the same battery swapping station.

In a possible embodiment, the battery swapping demand information of at least one battery swapping station and the station information of the at least one battery swapping station are the battery swapping demand information and the station information of different battery swapping stations.

In a third aspect, provided is an apparatus for publishing resource information, and the apparatus includes a memory and a processor, in which, the memory is configured to store instructions, and the processor is configured to read the instructions and implement the method in the first aspect and in any possible embodiment in the first aspect according to the instructions.

In a fourth aspect, provided is a server; and a cloud server includes the apparatus in the second aspect and in any possible embodiment in the second aspect.

In a fifth aspect, provided is a chip, which includes a processor configured to call and run a computer program from a memory, so that a device provided with the chip executes the method in the first aspect and in any possible embodiment in the first aspect.

In a sixth aspect, provided is a computer program; and when the computer program is executed by a computer, the computer implements the method in the first aspect and in any possible embodiment in the first aspect.

In a seventh aspect, provided is a computer-readable storage medium, which is configured to store a computer program; and when the computer program is executed by a computer, the computer implements the method in the first aspect and in any possible embodiment in the first aspect.

In an eighth aspect, provided is a computer program product, which includes a computer program instruction; and when the computer program instruction is executed by a computer, the computer implements the method in the first aspect and in any possible embodiment in the first aspect.

### BRIEF DESCRIPTION OF THE DRAWINGS

In order to more clearly illustrate the technical solution of the embodiments of the present application, the drawings that need to be used in the embodiments of the present application will be briefly introduced below, and it is obvious that the drawings described below are only some embodiments of the present application, and for those skilled in the art, other drawings can also be obtained according to the drawings without paying creative labor.
FIG. 1 is a framework diagram of a scene for publishing resource information provided by an embodiment of the present application.
FIG. 2 is a schematic diagram of a flow of publishing resource information provided by an embodiment of the present application.
FIG. 3 is another schematic diagram of a flow of publishing resource information provided by an embodiment of the present application.
FIG. 4 is another schematic diagram of a flow of publishing resource information provided by an embodiment of the present application.
FIG. 5 is another schematic diagram of a flow of publishing resource information provided by an embodiment of the present application.
FIG. 6 is another schematic diagram of a flow of publishing resource information provided by an embodiment of the present application.
FIG. 7 is another schematic diagram of a flow of publishing resource information provided by an embodiment of the present application.
FIG. 8 is another schematic diagram of a flow of publishing resource information provided by an embodiment of the present application.
FIG. 9 is another schematic diagram of a flow of publishing resource information provided by an embodiment of the present application.
FIG. 10 is another schematic diagram of a flow of publishing resource information provided by an embodiment of the present application.
FIG. 11 is a schematic block diagram of an apparatus for publishing resource information provided by an embodiment of the present application.
FIG. 12 is another schematic block diagram of an apparatus for publishing resource information provided by an embodiment of the present application.

### DETAILED DESCRIPTION

The implementation modes of the present application are further described below in conjunction with the accompanying drawings and embodiments. The embodiments of the present application are described in further detail below in conjunction with the accompanying drawings and embodiments.

Unless otherwise defined, all technical and scientific terms used in the present application have the same meanings as generally understood by those skilled in the technical art of the present application; the terms used in the description of the present application are for the purpose of describing specific embodiments only and are not intended to limit the present application; the terms "include" and "have" in the description and claims of the present application and in the description of the above accompanying drawings and any variation thereof are intended to cover the non-exclusive inclusion. The terms "first", "second", etc., in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiments described in the present application can be combined with other embodiments.

In the description of the embodiment of the present application, the term "and/or" is merely an association that describes the associated object, indicating that there can be three kinds of relationships, such as A and/or B, which can be denoted as: the existence of A alone, the existence of A and B at the same time, and the existence of B alone. In addition, the character "/" in this article generally indicates that the relationship between the preceding and following objects is an "or".

Energy conservation and emission reduction are the key to sustainable development of automotive industry. In this case, electric vehicles have become an important part in the sustainable development of the automotive industry due to their advantages of energy saving and environmental protection. For the electric vehicles, battery swapping technology is an important factor related to development.

At present, swapping a battery of the electric vehicle in a battery swapping station can quickly replenish the energy of the electric vehicle that is insufficient in energy, and thus the battery can be prevented from being charged for a long time. However, due to limited battery resources of the battery swapping station, it may not be able to meet the requirement of users on battery swapping, which reduces user experience.

In view of this, embodiments of the present application provide a method and apparatus for publishing resource information; the method includes: acquiring battery swapping demand information of at least one battery swapping station and station information of the at least one battery swapping station; generating resource information according to the battery swapping demand information of the at least one battery swapping station and the station information of the at least one battery swapping station; and publishing the resource information.

In the embodiments of the present application, according to the battery swapping demand information of the at least one battery swapping station and the station information of the at least one battery swapping station, more diversified resource information can be determined, thus the resource information can be published from different dimensions, the battery swapping demand of the user and the operation demand of a battery swapping station operator can be met as much as possible, the utilization rate of battery resources of the battery swapping station is improved, and the user experience is improved.

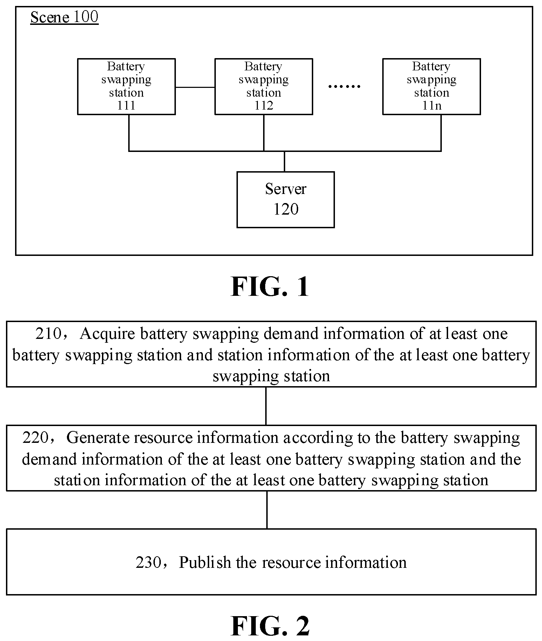

FIG. 1 is a framework diagram of a scene for publishing resource information provided by an embodiment of the present application.

A framework 100 of a scene for publishing the resource information can include at least one battery swapping station, such as battery swapping stations 111 to 11n. Each battery swapping station can be provided with a plurality of batteries, so that battery swapping service can be provided for electrical apparatuses, such as vehicles.

In some embodiments of the present application, the battery swapping station may include an immobile battery swapping station, namely, the position of the battery swapping station is fixed. Optionally, the battery swapping station may also include a mobile battery swapping station, namely, the position of the battery swapping station may be changed.

In some embodiments, the battery swapping station may include batteries with the same model, same size, same capacity and the like. Optionally, the battery swapping station may also include batteries with different models, different sizes or different capacities and the like.

In some embodiments of the present application, the battery swapping station can include a battery charging case and a battery temporary storage case. The batteries can be placed in the battery charging case so as to be charged. The batteries replaced from the electrical apparatus and/or the batteries which are charged with electric quantity reaching a preset range from the battery charging case, such as the batteries charged to be in a full state, can be placed in the battery temporary storage case.

In some embodiments of the present application, the battery swapping station can also be provided with a battery management unit, such as a charger battery management unit (CBMU), configured to monitor and acquire information such as voltage, current, temperature and state of charge (SOC) of the batteries in the battery swapping station.

In some embodiments of the present application, the framework 100 can also include a server 120. For example, the server 120 can acquire the battery swapping demand information of the battery swapping station and the station information of the battery swapping stations. For another example, the server 120 can determine the battery swapping demand information of the battery swapping station according to historical battery swapping information and the like of the battery swapping station.

In some embodiments of the present application, the server 120 can be arranged in the battery swapping station or outside the battery swapping station. For example, the server 120 can be a station control system of the battery swapping station or a cloud server outside the battery swapping station.

In the embodiments of the present application, the interaction between the vehicles to be subjected to battery swapping and the server 120 can be the interaction between the vehicles to be subjected to battery swapping and the server 120, or the interaction between a terminal device corresponding to the vehicles to be subjected to battery swapping and the server 120.

FIG. 2 is a flow schematic diagram of a method for publishing resource information provided by an embodiment of the present application.

210: Acquire battery swapping demand information of at least one battery swapping station and station information of the at least one battery swapping station.

In the embodiments of the present application, the battery swapping demand information of the battery swapping station can be understood as battery demand information of the vehicle to be subjected to battery swapping when the vehicle to be subjected to battery swapping is subjected to battery swapping at the battery swapping station. For example, when the vehicle to be subjected to battery swapping is subjected to battery swapping at the battery swapping station, the battery swapping demand information of the battery swapping station can be determined according to the battery information of the vehicle to be subjected to battery swapping.

In the embodiments of the present application, the station information of the at least one battery swapping station can include the battery information of the at least one battery swapping station and/or the location information of the battery swapping station and the like.

220: Generate resource information according to the battery swapping demand information of the at least one battery swapping station and the station information of the at least one battery swapping station.

In some embodiments of the present application, the generated resource information can include resource information presented to the user.

Optionally, the generated resource information can also include resource information for controlling the battery swapping station to adjust.

In the embodiments of the present application, according to the battery swapping demand information of the at least one battery swapping station and the station information of the at least one battery swapping station, diversified resource information meeting the battery swapping demand of the user and the operation demand of the battery swapping station operator can be generated as much as possible.

230: publish the resource information.

In the embodiments of the present application, there may be different resource information publishing modes. For example, the resource information can be published to the battery swapping station to control the battery swapping station to adjust the resource information, or the resource information can be transmit to the users to select according to the battery swapping demand.

In the embodiments of the present application, according to the battery swapping demand information of the at least one battery swapping station and the station information of the at least one battery swapping station, more diversified resource information can be determined, thus the resource information can be published from different dimensions, the battery swapping demand of the user and the operation demand of a battery swapping station operator can be met as much as possible, the utilization rate of battery resources of the battery swapping station is improved, and the user experience is improved.

In some embodiments of the present application, the battery swapping demand information of the at least one battery swapping station includes the demand information of the vehicles to be subjected to battery swapping of the at least one battery swapping station, and the demand information includes at least one selected from the group consisting of: quantity information of batteries in demand, model information of the batteries in demand, SOC information of the batteries in demand, SOH (state of health) information of the batteries in demand, capacity information of the batteries in demand or size information of the batteries in demand.

In some embodiments of the present application, the demand information of the vehicles to be subjected to battery swapping of the at least one battery swapping station can be the same.

For example, the demand information includes the quantity information of the batteries in demand, the model information of the batteries in demand and the SOC information of the batteries in demand. The vehicles to be subjected to battery swapping of the at least one battery swapping station include a first vehicle to be subjected to battery swapping and a second vehicle to be subjected to battery swapping, in which, the quantity, model and SOC information of the batteries in demand between the first vehicle to be subjected to battery swapping and the second vehicle to be subjected to battery swapping are the same.

For another example, the demand information includes the quantity information of the batteries in demand, the model information of the batteries in demand, the SOC information of the batteries in demand, the SOH information of the batteries in demand, the capacity information of the batteries in demand and the size information of the batteries in demand. The vehicles to be subjected to battery swapping of the at least one battery swapping station include the first vehicle to be subjected to battery swapping and the second vehicle to be subjected to battery swapping, in which, the quantity, model, SOC, SOH, capacity, the size and the like of the batteries in demand among the first vehicle to be subjected to battery swapping and the second vehicle to be subjected to battery swapping are the same.

Optionally, in the embodiments of the present application, if the at least one battery swapping station only includes one battery swapping station, the demand information among the vehicles to be subjected to battery swapping in the battery swapping station is the same. Optionally, if the at least one battery swapping station includes a plurality of battery swapping stations, the demand information among the vehicles to be subjected to battery swapping of the plurality of battery swapping stations is the same.

Under the condition that the demand information is the same, and during acquiring the battery swapping demand information of the at least one battery swapping station, only the quantity of the batteries in demand of the at least one battery swapping station can be acquired. For example, the quantity of the batteries in demand of the vehicles to be subjected to battery swapping in the at least one battery swapping station can be acquired through the quantity of the vehicles to be subjected to battery swapping.

In some embodiments, the demand information of the vehicles to be subjected to battery swapping in the at least one battery swapping station can be different.

Exemplarily, the demand information may include the quantity information of the batteries in demand, the model information of the batteries in demand and the SOC information of the batteries in demand. For example, the vehicles to be subjected to battery swapping in one battery swapping station include a first vehicle to be subjected to battery swapping, a second vehicle to be subjected to battery swapping, and a third vehicle to be subjected to battery swapping. he first vehicle to be subjected to battery swapping demands 2 batteries which have the model of A and have the SOC greater than or equal to 95%; the second vehicle to be subjected to battery swapping demands 3 batteries which have the model of B and have the SOC greater than or equal to 95%; and the third vehicle to be subjected to battery swapping demands 4 batteries which have the model of C and have the SOC greater than or equal to 98%.

Optionally, because of the different models of the vehicles to be subjected to battery swapping, at least one of the information such as the quantity, model, SOC, SOH, capacity or size of the batteries in demand among the vehicles to be subjected to battery swapping may be different.

Optionally, because of the different demands of the users, at least one of the information such as the quantity, model, SOC, SOH, capacity or size of the batteries in demand among the vehicles to be subjected to battery swapping may be different. For example, the users can select the quantity of the batteries in demand based on the battery swapping demand.

In the embodiments of the present application, the demand information of the vehicles to be subjected to battery swapping in the battery swapping station includes at least one selected from the group consisting of the quantity information of the batteries in demand, the model information of the batteries in demand, the SOC information of the batteries in demand, the SOH information of the batteries in demand, the capacity information of the batteries in demand or the size information of the batteries in demand, so that the resource information can be generated and published in a targeted manner based on at least one of the quantity, model, SOC, SOH, capacity or size information of the batteries in demand, the battery swapping demand of the users can be met as much as possible, and the user experience is improved.

In some embodiments of the present application, the station information of the at least one battery swapping station includes at least one selected from the group consisting of: location information of the at least one battery swapping station, quantity information of the batteries of the at least one battery swapping station, model information of the batteries of the at least one battery swapping station, SOC information of the batteries of the at least one battery swapping station, SOH information of the batteries of the at least one battery swapping station, capacity information of the batteries of the at least one battery swapping station or size information of the batteries of the at least one battery swapping station.

Due to different models of the electrical apparatuses and/or different user demands, at least one of the quantity information of the batteries in demand, the model information of the batteries in demand, the SOC information of the batteries in demand, the SOH information of the batteries in demand, the capacity information of the batteries in demand or the size information of the batteries in demand may be different; and it is needed to distinguish at least one of the quantity, model, SOC, SOH, capacity or size information of the batteries in the battery swapping station, thereby determining the batteries meeting the conditions of the batteries in demand in the battery swapping station.

Exemplarily, the station information of the at least one battery swapping station can include the location information of the at least one battery swapping station, the quantity information of the batteries of the at least one battery swapping station and the SOC information of the batteries. For example, the at least one battery swapping station may include a first battery swapping station and a second battery swapping station. The location of the first battery swapping station is location 1, the number of the batteries is 4, and the SOC of the batteries is 60%, 70%, 90% and 99% respectively; and the location of the first battery swapping station is location 2, the number of the batteries is 5, and the SOC of the batteries is 70%, 80%, 90%, 97% and 99% respectively.

In the embodiments of the present application, the station information of the battery swapping station includes the location information of the battery swapping station, the battery quantity information, the battery model information, the battery SOC information, the battery SOH information, the battery capacity information or the battery size information, so that the resource information can be generated and published in a targeted manner based on at least one of the location information of the battery swapping station, the battery quantity information, the battery model information, the battery SOC information, the battery SOH information, the battery capacity information or the battery size information; and therefore, the utilization rate of the battery resources of the battery swapping station can be improved, the battery swapping demand of the users can be met as much as possible, and the user experience can be improved.

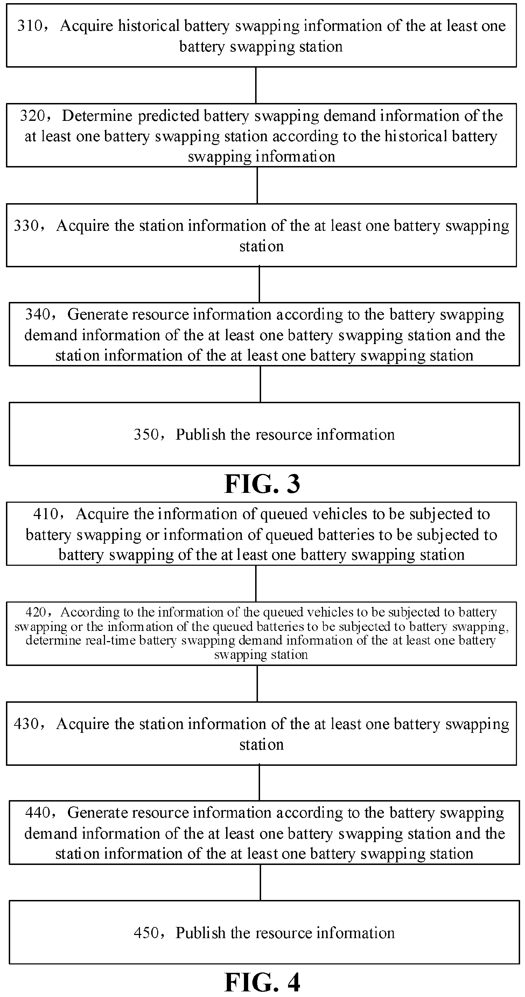

FIG. 3 is a flow schematic diagram of a method for publishing resource information provided by an embodiment of the present application.

310: Acquire historical battery swapping information of the at least one battery swapping station.

The historical battery swapping information may include the battery swapping information at a certain moment or within a certain period of time in the past.

For example, if the predicted battery swapping demand information is the battery swapping demand information at the first moment, the historical battery swapping information may include the battery swapping information at the first moment yesterday, the first moment on the same working day in the past, or the first moment on the same day in the last year.

For another example, if the predicted battery swapping demand information is the battery swapping demand information between 12:00 a.m. and 1:00 p.m., the historical battery swapping information may include the battery swapping information between 12:00 a.m. and 1:00 p.m. on the same day in the past year or the battery swapping information between 12:00 a.m. and 1:00 p.m. on the same working day in the past.

The historical battery swapping information can include at least one of the battery number, the battery model information, the battery SOC information, the battery SOH information, the battery capacity information or the battery size information of historical battery swapping.

320: Determine predicted battery swapping demand information of the at least one battery swapping station according to the historical battery swapping information.

Exemplarily, the predicted battery swapping demand information of the at least one battery swapping station can be determined according to the historical battery swapping information within a certain period of time in the past. For example, the battery swapping demand information of Monday of the second week can be predicted according to the historical battery swapping information of Monday of the first week. For another example, the battery swapping demand information of the Monday of the fourth week can be predicted according to the historical battery swapping information of the Monday of the first week, the Monday of the second week and the Monday of the third week.

In the embodiments of the present application, the battery swapping demand information of the battery swapping station can be predicted more accurately according to the historical battery swapping information of the battery swapping station, so that the resource information can be generated and published in advance based on the predicted battery swapping demand information of the battery swapping station, the battery swapping load capacity of the battery swapping station can be shunted in advance to a certain extent, thereby reducing congestion in battery swapping during the battery swapping process.

330: Acquire the station information of the at least one battery swapping station.

The station information of the at least one battery swapping station can refer to above description, and will not be listed here.

340: Generate resource information according to the battery swapping demand information of the at least one battery swapping station and the station information of the at least one battery swapping station.

350: publish the resource information.

The content of steps 340 and 350 can refer to relevant content of steps 220 and 230, and will not be listed here.

FIG. 4 is a flow schematic diagram of a method for publishing resource information provided by an embodiment of the present application.

410: Acquire the information of queued vehicles to be subjected to battery swapping or information of queued batteries to be subjected to battery swapping of the at least one battery swapping station.

Optionally, the information of the vehicles to be subjected to battery swapping may be associated with the information of the batteries in demand; and when the information of the vehicles to be subjected to battery swapping is acquired, the information of the batteries in demand of the vehicles to be subjected to battery swapping can be obtained.

Exemplarily, the request information can be transmitted to the queued vehicles to be subjected to battery swapping so as to acquire the information of the vehicles to be subjected to battery swapping. For example, the cloud server can transmit the request information to the vehicles to be subjected to battery swapping, and the vehicles to be subjected to battery swapping will transmit the information of the vehicles to be subjected to battery swapping, such as vehicle code information, to the cloud server after receiving the request information. The cloud server can determine the information of the batteries in demand of the vehicles to be subjected to battery swapping according to the information of the vehicles to be subjected to battery swapping.

Optionally, the information of the battery to be subjected to battery swapping may be associated with the information of the battery in demand corresponding to the battery to be subjected to battery swapping; and when the information of the battery to be subjected to battery swapping, such as the model information of the battery to be subjected to battery swapping, is obtained, the information of the battery in demand corresponding to the battery to be subjected to battery swapping can be obtained.

Exemplarily, the request information can be transmitted to the battery to be subjected to battery swapping to acquire the information of the battery in demand corresponding to the battery to be subjected to battery swapping. For example, the cloud server can transmit the request information to the battery to be subjected to battery swapping, and the battery to be subjected to battery swapping can transmit the information of the battery to be subjected to battery swapping, such as the model information of the battery to be subjected to battery swapping, to the cloud server after receiving the request information. The cloud server can determine the information of the battery in demand corresponding to the battery to be subjected to battery swapping according to the information of the battery to be subjected to battery swapping.

In some embodiments of the present application, the vehicles within the preset range of the at least one battery swapping station can be treated as the queued vehicles to be subjected to battery swapping.

In some embodiments of the present application, the controller address of the vehicles within the preset range of the at least one battery swapping station can be acquired; and then the vehicles are determined to be the queued vehicles to be subjected to battery swapping based on the controller address.

For example, in the vehicles within the preset range of the battery swapping station, the registered vehicle of which the controller address is the battery swapping station can be treated as the queued vehicle to be subjected to battery swapping. The registered vehicle is a vehicle which can be subjected to battery swapping in the battery swapping station after being registered in the battery swapping station.

In the embodiments of the present application, according to the controller address of the vehicles within the preset range of the battery swapping station, the vehicles to be subjected to battery swapping within the preset range of the battery swapping station can be determined more accurately, so that real-time battery swapping demand information of the battery swapping station can be determined more accurately according to the information of the vehicles to be subjected to battery swapping.

In some embodiments of the present application, GPS information of batteries can also be acquired; the batteries within the preset range of the at least one battery swapping station are determined according to the GPS information of the batteries; and the batteries within the preset range are treated as the queued batteries to be subjected to battery swapping.

420: According to the information of the queued vehicles to be subjected to battery swapping or the information of the queued batteries to be subjected to battery swapping, determine real-time battery swapping demand information of the at least one battery swapping station.

In the embodiments of the present application, according to the controller address of the vehicles within the preset range of the battery swapping station, the vehicles to be subjected to battery swapping within the preset range of the battery swapping station can be determined more accurately, so that real-time battery swapping demand information of the battery swapping station can be determined more accurately according to the information of the vehicles to be subjected to battery swapping.

430: Acquire the station information of the at least one battery swapping station.

The station information of the at least one battery swapping station can refer to above description, and will not be listed here.

440: Generate resource information according to the battery swapping demand information of the at least one battery swapping station and the station information of the at least one battery swapping station.

450: publish the resource information.

The content of steps 440 and 450 can refer to relevant content of steps 220 and 230, and will not be listed here.

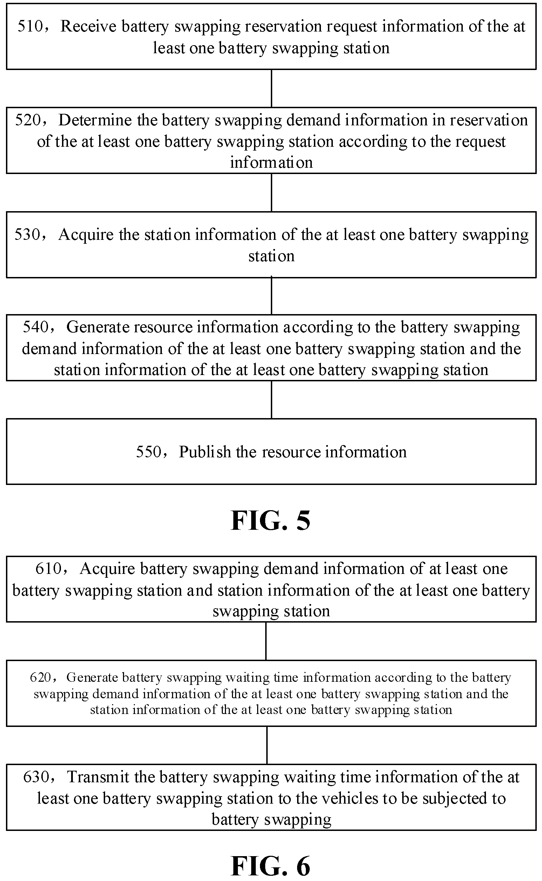

FIG. 5 is a flow schematic diagram of a method for publishing resource information provided by an embodiment of the present application.

510: Receive battery swapping reservation request information of the at least one battery swapping station.

The battery swapping reservation request information includes the information of the reserved vehicle to be subjected to battery swapping or the battery information of the reserved vehicle to be subjected to battery swapping.

Optionally, the battery swapping reservation request information can include the information of the demanded battery of the vehicle to be subjected to battery swapping.

In some embodiments of the present application, the information of the vehicle to be subjected to battery swapping can be associated with the information of the demanded battery, and when the information of the vehicle to be subjected to battery swapping is obtained, the information of the demanded battery of the vehicle to be subjected to battery swapping can be obtained.

Exemplarily, when the vehicle to be subjected to battery swapping transmits the battery swapping reservation request information to the cloud server, the request information may include the information of the vehicle to be subjected to battery swapping. The cloud server can determine the information of the batteries in demand of the vehicles to be subjected to battery swapping according to the information of the vehicles to be subjected to battery swapping.

Optionally, the battery information of the vehicle to be subjected to battery swapping can be associated with information of the demanded battery of the vehicle to be subjected to battery swapping, and when the battery information of the vehicle to be subjected to battery swapping, such as battery model information, is obtained, the information of the demanded battery of the vehicle to be subjected to battery swapping can be obtained.

Exemplarily, the vehicle to be subjected to battery swapping can transmit the information of the battery of the vehicle to be subjected to battery swapping to the cloud server. The cloud server can determine the information of the demanded battery of the vehicle to be subjected to battery swapping according to the information of the battery of the vehicle to be subjected to battery swapping.

In some embodiments of the present application, the vehicle to be subjected to battery swapping can directly transmit the battery swapping reservation request information to the cloud. Optionally, the vehicle to be subjected to battery swapping can transmit the battery swapping reservation request information to the cloud by the battery swapping station. For example, the vehicle to be subjected to battery swapping transmits the battery swapping reservation request information to the battery swapping station, and the battery swapping station transmits the battery swapping reservation request information to the cloud server.

In some embodiments of the present application, the vehicle to be subjected to battery swapping can select the battery swapping station and/or battery swapping time for battery swapping when reserving battery swapping.

520: Determine the battery swapping demand information in reservation of the at least one battery swapping station according to the request information.

Optionally, if the vehicle to be subjected to battery swapping specifies a battery swapping station for battery swapping when reserving battery swapping, the battery swapping demand information of each battery swapping station in the at least one battery swapping station can be determined according to the request information.

Optionally, if the vehicle to be subjected to battery swapping does not specify the battery swapping station for battery swapping when reserving battery swapping, the battery swapping demand information of the at least one battery swapping station treated as a whole can be determined according to the request information.

Optionally, the reserved vehicles to be subjected to battery swapping may include the vehicle that is to be subjected to battery swapping and specifies the battery swapping station and/or the vehicle that is to be subjected to battery swapping and does not specify the battery swapping station.

In the embodiments of the present application, the battery swapping demand information in reservation of the battery swapping station can be determined more accurately according to the battery swapping reservation request information of the battery swapping station, so that resource information can be more accurately generated according to the battery swapping demand information in reservation.

530: Acquire the station information of the at least one battery swapping station.

The station information of the at least one battery swapping station can refer to above description, and will not be listed here.

540: Generate resource information according to the battery swapping demand information of the at least one battery swapping station and the station information of the at least one battery swapping station.

550: publish the resource information.

The content of steps 540 and 550 can refer to relevant content of steps 220 and 230, and will not be listed here.

In some embodiments of the present application, the resource information includes battery swapping waiting time information, recommended battery swapping time information, recommended battery swapping station information, battery swapping cost adjustment information or battery resource scheduling information.

In some embodiments of the present application, the generated resource information can be transmitted to the vehicles to be subjected to battery swapping. For example, the battery swapping waiting time information, the recommended battery swapping time information, and the recommended battery swapping station information.

The vehicles to be subjected to battery swapping can include the reserved vehicles to be subjected to battery swapping, the queued vehicles to be subjected to battery swapping, the historical battery swapping vehicles or the registered battery swapping vehicles of the battery swapping station.

The generated resource information is transmitted to the vehicles to be subjected to battery swapping, and the resource information can be transmitted to the vehicles and/or a terminal device associated with the vehicles to be subjected to battery swapping.

In some embodiments of the present application, the battery swapping station can be adjusted or scheduled according to the generated resource information. For example, the battery swapping cost of the battery swapping station can be adjusted according to the battery swapping cost adjustment information, or the battery resources of the battery swapping station can be scheduled according to the battery resource scheduling information.

In the embodiments of the present application, the generated resource information may include information of different dimensions, further, the resource information can be published based on different dimensions, so that the shunting effect on the battery swapping station can be achieved through different dimensions, the requirements of the users and operators can be met as much as possible, the utilization rate of the battery swapping station is improved, and the user experience is improved.

FIG. 6 is a flow schematic diagram of a method for publishing resource information provided by an embodiment of the present application.

610: Acquire battery swapping demand information of at least one battery swapping station and station information of the at least one battery swapping station.

In some embodiments of the present application, the battery swapping demand information of the at least one battery swapping station may include at least one selected from the group consisting of battery swapping demand information in reservation, real-time battery swapping demand information or predicted battery swapping demand information.

The content of acquiring the battery swapping demand information of the at least one battery swapping station can refer to related description in steps 210, 310 and 320, steps 410 and 420, and steps 510 and 520, and will not be listed here.

The content of acquiring the station information of the at least one battery swapping station can refer to related description in step 210 and above content, and will not be listed here.

620: Generate battery swapping waiting time information according to the battery swapping demand information of the at least one battery swapping station and the station information of the at least one battery swapping station.

For example, according to the information of the demanded battery of the battery swapping station, the information of the batteries of the battery swapping station and the battery swapping speed information of the vehicles to be subjected to battery swapping, the battery swapping waiting time information can be generated.

In some embodiments of the present application, the battery swapping waiting time information of the vehicles to be subjected to battery swapping at one battery swapping station can be generated. For example, according to the battery swapping demand information of one battery swapping station and the station information of the battery swapping station, the battery swapping waiting time information of the vehicle to be subjected to battery swapping at the battery swapping station can be generated for the reserved vehicle to be subjected to battery swapping at the battery swapping station.

In some embodiments, the battery swapping waiting time information of the vehicles to be subjected to battery swapping at a plurality of battery swapping stations can be generated. For example, according to the battery swapping demand information of the plurality of battery swapping stations and the station information of the plurality of battery swapping stations, the battery swapping waiting time information of the plurality of battery swapping stations can be generated for registered users. The registered users can perform battery swapping at the plurality of battery swapping stations.

630: Transmit the battery swapping waiting time information of the at least one battery swapping station to the vehicles to be subjected to battery swapping.

The vehicles to be subjected to battery swapping include the queued vehicles to be subjected to battery swapping of the at least one battery swapping station, the reserved vehicles to be subjected to battery swapping, the historical battery swapping vehicles or the registered vehicles.

In some embodiments of the present application, the battery swapping waiting time information for battery swapping at one battery swapping station can be transmitted to the vehicles to be subjected to battery swapping.

In some embodiments of the present application, the battery swapping waiting time information for battery swapping at the plurality of battery swapping stations can be transmitted to the vehicles to be subjected to battery swapping.

In the embodiments of the present application, the battery swapping waiting time of the at least one battery swapping station can be transmitted to the vehicles to be subjected to battery swapping, which facilitates the users to select whether to wait for battery swapping or to select the battery swapping station for battery swapping according to demands, and thus the user experience can be improved. On the other hand, the battery swapping load capacity of the battery swapping station with high busyness can also be reduced as much as possible through the selection of the user.

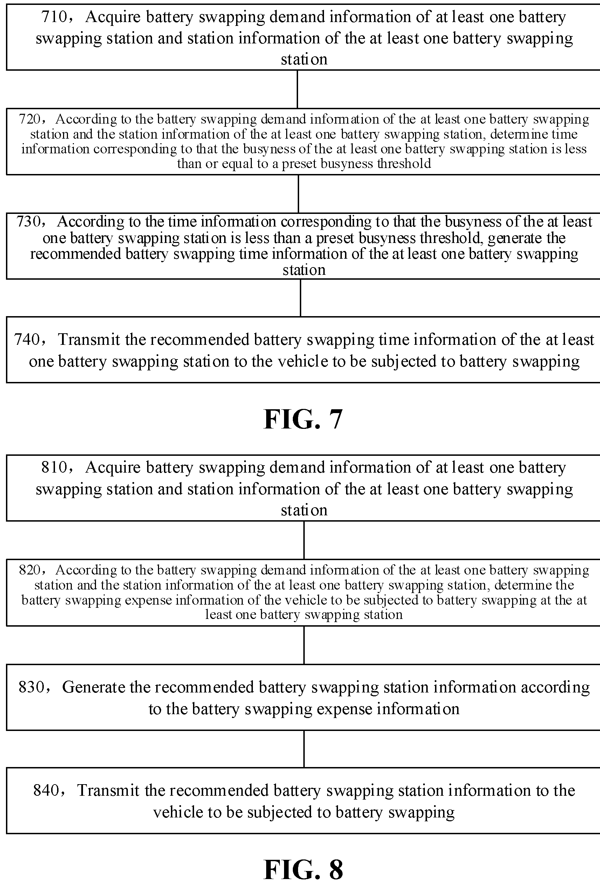

FIG. 7 is a flow schematic diagram of a method for publishing resource information provided by an embodiment of the present application.

710: Acquire battery swapping demand information of at least one battery swapping station and station information of the at least one battery swapping station.

In some embodiments of the present application, the battery swapping demand information of the at least one battery swapping station may include at least one selected from the group consisting of battery swapping demand information in reservation, real-time battery swapping demand information or predicted battery swapping demand information.

The content of acquiring the battery swapping demand information of the at least one battery swapping station can refer to related description in steps 210, 310 and 320, steps 410 and 420, and steps 510 and 520, and will not be listed here.

The content of acquiring the station information of the at least one battery swapping station can refer to related description in step 210 and above content, and will not be listed here.

720: According to the battery swapping demand information of the at least one battery swapping station and the station information of the at least one battery swapping station, determine time information corresponding to that the busyness of the at least one battery swapping station is less than or equal to a preset busyness threshold.

In the embodiments of the present application, the higher the busyness is, the busier the battery swapping station is; and the lower busyness is, the idler the battery swapping station is.

For example, the at least one battery swapping station includes the first battery swapping station, and the time corresponding to that the busyness of the first battery swapping station is less than the preset busyness threshold can be 11:00 a.m. to 12:00 a.m. and 6:00 p.m. to 7:00 p.m.

Optionally, according to the battery demand information of the at least one battery swapping station and the station information of the at least one battery swapping station, the quantity of the remaining vehicles to be subjected to battery swapping at different moments of the at least one battery swapping station can be determined. Then, the busyness of the battery swapping station can be determined according to the quantity of the remaining vehicles to be subjected to battery swapping at different moments of the at least one battery swapping station.

The more the quantity of the remaining vehicles to be subjected to battery swapping at different moments of the battery swapping station is, the higher the busyness of the battery swapping station is.

Optionally, according to the battery demand information of the at least one battery swapping station and the station information of the at least one battery swapping station, the quantity of the remaining batteries to be subjected to battery swapping at different moments of the at least one battery swapping station can be determined. Then, the busyness of the at least one battery swapping station can be determined according to the quantity of the remaining batteries to be subjected to battery swapping at different moments of the at least one battery swapping station.

The more the quantity of the remaining batteries to be subjected to battery swapping at different moments of the battery swapping station is, the higher the busyness of the battery swapping station is.

730: According to the time information corresponding to that the busyness of the at least one battery swapping station is less than a preset busyness threshold, generate the recommended battery swapping time information of the at least one battery swapping station.

For example, the time corresponding to that the busyness of the battery swapping station is less than the preset busyness threshold can be 11:00 a.m. to 12:00 a.m. and 6:00 p.m. to 7:00 p.m., and the recommended battery swapping time of the battery swapping station can be 11:00 a.m. to 12:00 a.m. and 6:00 p.m. to 7:00 p.m.

In the embodiments of the present application, according to the battery swapping demand information of the at least one battery swapping station and the station information of the at least one battery swapping station, the time information corresponding to that the busyness of the at least one battery swapping station is less than or equal to the preset busyness threshold can be determined, and further, the recommended battery swapping time of the at least one battery swapping station can be determined reasonably according to the corresponding time.

740: Transmit the recommended battery swapping time information of the at least one battery swapping station to the vehicle to be subjected to battery swapping.

The vehicles to be subjected to battery swapping include the queued vehicles to be subjected to battery swapping, the reserved vehicles to be subjected to battery swapping, the historical battery swapping vehicles or the registered vehicles of the at least one battery swapping station.

In some embodiments of the present application, the recommended battery swapping time information of one battery swapping station can be transmitted to the vehicles to be subjected to battery swapping. For example, if the vehicle to be subjected to battery swapping specifies the battery swapping station for battery swapping in a mode of queuing to wait for battery swapping in the battery swapping station, the recommended battery swapping time information of the battery swapping station can be transmitted to the vehicle to be subjected to battery swapping.

In some embodiments of the present application, the recommended battery swapping time information of the plurality of battery swapping stations can be transmitted to the vehicles to be subjected to battery swapping. For example, if the vehicle to be subjected to battery swapping does not specify the battery swapping station for battery swapping during battery swapping reservation, the recommended battery swapping time information of the plurality of battery swapping stations can be transmitted to the vehicle to be subjected to battery swapping.

In the embodiments of the present application, the recommended battery swapping time information of the at least one battery swapping station can be transmitted to the vehicles to be subjected to battery swapping, so that the users can select a proper battery swapping time to the battery swapping station for battery swapping on the basis of requirements, which can reduce the battery swapping waiting time of the users in the battery swapping station, and improve the user experience. On the other hand, the battery swapping load capacity of the battery swapping station with high busyness can also be reduced to a certain degree through the selection of the user.

FIG. 8 is a flow schematic diagram of a method for publishing resource information provided by an embodiment of the present application.

810: Acquire battery swapping demand information of at least one battery swapping station and station information of the at least one battery swapping station.

In some embodiments of the present application, the battery swapping demand information of the at least one battery swapping station may include at least one selected from the group consisting of battery swapping demand information in reservation, real-time battery swapping demand information or predicted battery swapping demand information.

The content of acquiring the battery swapping demand information of the at least one battery swapping station can refer to related description in steps 210, 310 and 320, steps 410 and 420, and steps 510 and 520, and will not be listed here.

The content of acquiring the station information of the at least one battery swapping station can refer to related description in step 210 and above content, and will not be listed here.

820: According to the battery swapping demand information of the at least one battery swapping station and the station information of the at least one battery swapping station, determine the battery swapping expense information of the vehicle to be subjected to battery swapping at the at least one battery swapping station.

The battery swapping expense information includes the expense information of the battery swapping time and the expense information of the battery swapping cost.

In some embodiments of the present application, the expense information of battery swapping cost can include the information of battery swapping cost of the vehicle to be subjected to battery swapping at the at least one battery swapping station.

Optionally, the expense information of battery swapping cost can also include the information of cost on electricity when driving the vehicle to be battery swapping to the at least one battery swapping station.

In some embodiments of the present application, the expense information of battery swapping time can be the time spent by the vehicle to be battery swapping from the current moment to the completion of battery swapping in the at least one battery swapping station. For example, the expense information of battery swapping time can be the sum of the time of driving the vehicle to be battery swapping to the at least one battery swapping station and the battery swapping waiting time after arriving at the at least one battery swapping station.

830: Generate the recommended battery swapping station information according to the battery swapping expense information.

Optionally, the first few battery swapping stations with the minimum battery swapping time can be determined according to the expense information of battery swapping time, and then the few battery swapping stations are treated as the recommended battery swapping stations.

Optionally, the first few battery swapping stations with the minimum battery swapping cost can be determined according to the expense information of battery swapping cost, and then the few battery swapping stations are treated as recommended battery swapping stations.

Optionally, the first few battery swapping stations with the minimum comprehensive battery swapping expense can be determined in combination with the expense information of the battery swapping time and battery swapping cost, and then the few battery swapping stations are treated as the recommended battery swapping stations.

In the embodiments of the present application, according to the battery swapping demand information of the at least one battery swapping station and the station information of the at least one battery swapping station, the expense information of the battery swapping time and battery swapping cost of the vehicles to be subjected to battery swapping in the at least one battery swapping station can be determined, and then the recommended battery swapping station information can be determined more reasonably according to the expense information of the battery swapping time and battery swapping cost.

In some embodiments of the present application, the recommended battery swapping station information includes the information of the battery swapping station with the minimum battery swapping time and/or the information of the battery swapping station with the minimum battery swapping cost.

For example, if the user wants to spend the least time on battery swapping, the information of the battery swapping station with the minimum battery swapping time can be transmitted to the user. For example, if the user wants to spend the least cost on battery swapping, the information of the battery swapping station with the minimum battery swapping cost can be transmitted to the user.

In the embodiments of the present application, by generating the information of the battery swapping station with the minimum battery swapping time and/or the information of the battery swapping station with the minimum battery swapping cost, the data cost in the generation of the recommended battery swapping station information can be decreased. On the other hand, the users can quickly acquire the recommended battery swapping station information, and thus the influence of the data volume of the recommended battery swapping station on the users is reduced.

840: Transmit the recommended battery swapping station information to the vehicle to be subjected to battery swapping.

By transmitting the recommended battery swapping station information to the vehicle to be subjected to battery swapping, the user can select the battery swapping station for battery swapping according to the demands, so that the effect of guiding to the recommended battery swapping station can be achieved, and the battery swapping load capacity among the battery swapping stations is balanced.

Moreover, the recommended battery swapping station information is transmitted to the vehicles to be subjected to battery swapping, which facilitates the users to select the battery swapping station according to demands, thus improving the user experience.

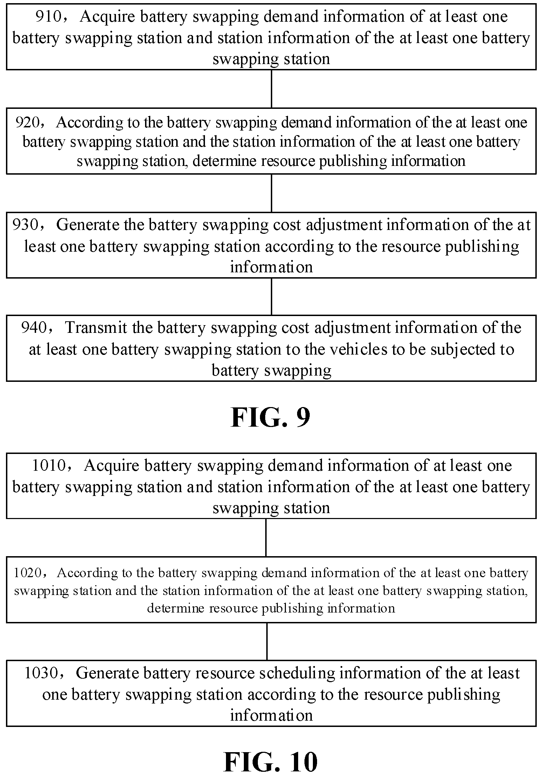

FIG. 9 is a flow schematic diagram of a method for publishing resource information provided by an embodiment of the present application.

910: Acquire battery swapping demand information of at least one battery swapping station and station information of the at least one battery swapping station.

In some embodiments of the present application, the battery swapping demand information of the at least one battery swapping station may include at least one selected from the group consisting of battery swapping demand information in reservation, real-time battery swapping demand information or predicted battery swapping demand information.

The content of acquiring the battery swapping demand information of the at least one battery swapping station can refer to related description in steps 210, 310 and 320, steps 410 and 420, and steps 510 and 520, and will not be listed here.

The content of acquiring the station information of the at least one battery swapping station can refer to related description in step 210 and above content, and will not be listed here.

920: According to the battery swapping demand information of the at least one battery swapping station and the station information of the at least one battery swapping station, determine resource publishing information.

The resource publishing information includes a battery resource publishing thermodynamic chart of the at least one battery swapping station and/or the information of the busyness of the at least one battery swapping station

In some embodiments of the present application, in the battery resource publishing thermodynamic chart, different colors can be adopted to represent the quantity of batteries capable of being swapped in the battery swapping station. For example, when the quantity of the batteries capable of being swapped in the battery swapping station is more than a certain quantity, the batteries capable of being swapped in the battery swapping station are represented by green on the thermodynamic chart. For another example, when the quantity of the batteries capable of being swapped in the battery swapping station is less than a certain quantity, the batteries capable of being swapped in the battery swapping station are represented by red on the thermodynamic chart.

Optionally, the batteries capable of being swapped in the battery swapping station can include batteries with SOC greater than or equal to a certain threshold. For example, batteries with SOC greater than 95%.

Optionally, the batteries capable of being swapped in the battery swapping station can be the remaining batteries capable of being swapped remaining after the battery swapping station meets respective battery swapping demand.

In some embodiments of the present application, according to the battery swapping demand information of the at least one battery swapping station and the station information of the at least one battery swapping station, the quantity of the missing batteries capable of being swapped when the at least one battery swapping station meets respective battery swapping demand or the quantity of the remaining batteries capable of being swapped after the at least one battery swapping station meets respective battery swapping demand can be determined. The more the quantity of the remaining batteries capable of being swapped in the battery swapping station is, the lower the busyness of the battery swapping station is, namely, the idler the battery swapping station is; and the more the quantity of the missing batteries capable of being swapped in the battery swapping station is, the busier the battery swapping station is.

930: Generate the battery swapping cost adjustment information of the at least one battery swapping station according to the resource publishing information.

For example, the battery swapping cost of the battery swapping station in a red area in the thermodynamic chart can be increased. For another example, the battery swapping cost of the battery swapping station in a green area in the thermodynamic chart can be reduced.

In the embodiments of the present application, according to the battery swapping demand information of the at least one battery swapping station and the station information of the at least one battery swapping station, the resource publishing information of the at least one battery swapping station can be determined, so that the battery swapping cost of the battery swapping station can be adjusted more reasonably according to the resource publishing information of the at least one battery swapping station; and therefore, the selection of the users for the battery swapping stations can be adjusted, and furthermore, the battery swapping load capacity of the battery swapping stations can be adjusted.

In some embodiments of the present application, the generating the battery swapping cost adjustment information of the at least one battery swapping station according to the resource publishing information includes: under the condition that the busyness of the at least one battery swapping station is greater than or equal to the preset busyness threshold, determining to increase the battery swapping cost of the at least one battery swapping station.

For example, when the quantity of the missing batteries capable of being swapped when the battery swapping station meets respective battery swapping demand is greater than a certain threshold, it can be determined that the cost of the battery swapping station can be increased.

In the embodiments of the present application, under the condition that the battery swapping station is high in busyness, the battery swapping cost of the battery swapping station can be increased, so that the quantity of the vehicles to be subjected to battery swapping in the battery swapping station can be reduced to a certain extent, further, the busyness of the battery swapping station is reduced, and the balance degree of the battery swapping load capacity of the battery swapping station is increased.

In some embodiments of the present application, the generating the battery swapping cost adjustment information of the at least one battery swapping station according to the resource publishing information includes: under the condition that the busyness of the at least one battery swapping station is less than or equal to the preset busyness threshold, determining to decrease the battery swapping cost of the at least one battery swapping station.

For example, when the quantity of the remaining batteries capable of being swapped when the battery swapping station meets respective battery swapping demand is greater than a certain threshold, it can be determined that the cost of the battery swapping station can be decreased.

In the embodiments of the present application, under the condition that the battery swapping station is low in busyness, the battery swapping cost of the battery swapping station can be decreased, so that the quantity of the vehicles to be subjected to battery swapping in the battery swapping station can be increased to a certain extent, further, the busyness of the battery swapping station is increased, and the balance degree of the battery swapping load capacity of the battery swapping station is increased.

940: Transmit the battery swapping cost adjustment information of the at least one battery swapping station to the vehicles to be subjected to battery swapping.

The vehicles to be subjected to battery swapping include the queued vehicles to be subjected to battery swapping, the reserved vehicles to be subjected to battery swapping, the historical battery swapping vehicles or the registered vehicles of the at least one battery swapping station.

In the embodiments of the present application, the battery swapping cost adjustment information of the at least one battery swapping station can be transmitted to the vehicles to be subjected to battery swapping, thus the users can conveniently select the battery swapping station for battery swapping according to the demands, the battery swapping cost of the users can be reduced, and the user experience can be improved. On the other hand, by adjusting the battery swapping cost, the busyness of the battery swapping station can be adjusted, and thus the balance degree of the battery swapping load capacity of the battery swapping station is improved.

FIG. 10 is a flow schematic diagram of a method for publishing resource information provided by an embodiment of the present application.

1010: Acquire battery swapping demand information of at least one battery swapping station and station information of the at least one battery swapping station.

In some embodiments of the present application, the battery swapping demand information of the at least one battery swapping station may include at least one selected from the group consisting of battery swapping demand information in reservation, real-time battery swapping demand information or predicted battery swapping demand information.

The content of acquiring the battery swapping demand information of the at least one battery swapping station can refer to related description in steps 210, 310 and 320, steps 410 and 420, and steps 510 and 520, and will not be listed here.

The content of acquiring the station information of the at least one battery swapping station can refer to related description in step 210 and above content, and will not be listed here.

1020: According to the battery swapping demand information of the at least one battery swapping station and the station information of the at least one battery swapping station, determine resource publishing information.

The resource publishing information includes the battery resource publishing thermodynamic chart of the at least one battery swapping station and/or the information of the busyness of the at least one battery swapping station.

The content of step 1020 can refer to related description of step 920, and will not be listed here.

1030: Generate battery resource scheduling information of the at least one battery swapping station according to the resource publishing information.

Optionally, the batteries of the battery swapping station with a large quantity of batteries capable of being swapped in the thermodynamic chart can be scheduled to the battery swapping station with a small quantity of batteries capable of being swapped.

Optionally, the batteries of the battery swapping station with low busyness can be scheduled to the battery swapping station with high busyness.

In the embodiments of the present application, according to the battery swapping demand information of the at least one battery swapping station and the station information of the at least one battery swapping station, the resource publishing information can be determined; and then the battery resource scheduling information of the at least one battery swapping station can be determined more reasonably according to the resource publishing information, so that the user experience can be improved.

In some embodiments of the present application, the generating battery resource scheduling information of the at least one battery swapping station according to the resource publishing information includes: under the condition that the busyness of the at least one battery swapping station is greater than or equal to the preset busyness threshold, determining to schedule the batteries of a target battery swapping station to the at least one battery swapping station, in which, the target battery swapping station includes a battery swapping station near the at least one battery swapping station.

Optionally, the target battery swapping station can include an immobile battery swapping station and/or a mobile battery swapping station.

In the embodiments of the present application, the batteries of other power stations around the battery swapping station with high busyness can be scheduled to the battery swapping station with high busyness, thus the busyness of the battery swapping station with high busyness can be decreased, the battery swapping waiting time of the users can be reduced, and the user experience is improved.

Before determining to schedule the batteries of the target battery swapping station to the at least one battery swapping station, the target battery swapping station can be determined firstly.

In some embodiments of the present application, according to station information of the at least one battery swapping station, distance information or running time information between the at least one battery swapping station and the battery swapping station near the at least one battery swapping station can be determined, in which, the station information of the at least one battery swapping station includes the location information of the at least one battery swapping station; and under the condition that the distance information is within a preset distance range or the running time information is within a preset time range, the battery swapping station nearby is determined to be the target battery swapping station.

Optionally, the target battery swapping station is the battery swapping stations with the busyness less than or equal to certain busyness. For example, in all the battery swapping stations with the distance information within the preset distance range or the running time information within the preset time range, the battery swapping station with the busyness less than or equal to the certain busyness can be treated as the target battery swapping station.

In the embodiments of the present application, a target battery swapping station group with the distance information within the preset distance range or running time information within the preset time range can be selected from the battery swapping stations nearby, and then the battery swapping station with the busyness less than or equal to the certain busyness can be selected from the target battery swapping station group as the target battery swapping station. Or, the target battery swapping station group with the busyness less than or equal to the certain busyness can be selected from the battery swapping stations near the at least one battery swapping station, and then the battery swapping station with the distance information within the preset distance range or running time information within the preset time range is selected from the target battery swapping station group as the target battery swapping station.

In the embodiments of the present application, the distance information or running time information among the battery swapping stations can be determined according to the location information of the battery swapping stations, so that the target battery swapping station with the distance information within the preset distance range or the running time information within the preset time range can be further determined, the cost and/or time for battery resource scheduling can be reduced, the resource scheduling cost can be reduced, and the battery swapping waiting time of the user is decreased.

In some embodiments of the present application, the battery swapping demand information of the at least one battery swapping station and the station information of the at least one battery swapping station are the battery swapping demand information and the station information of the same battery swapping station.

For example, according to the battery swapping demand information of the battery swapping station and the station information of the battery swapping station, the battery swapping waiting time information of the vehicle to be subjected to battery swapping in the battery swapping station can be determined.

For example, according to the battery swapping demand information of the battery swapping station and the station information of the battery swapping station, the battery swapping cost adjustment information of the battery swapping station can be determined.

In the embodiment of the present application, by acquiring the battery swapping demand information and the station information of the same battery swapping station, the resource information of the battery swapping station can be determined, and thus different demands of the users and operators on the battery swapping station can be met as much as possible.

In some embodiments, the battery swapping demand information of the at least one battery swapping station and the station information of the at least one battery swapping station are the battery swapping demand information and the station information of different battery swapping stations respectively.

Exemplarily, according to the battery swapping demand information of one battery swapping station and the station information of another battery swapping station, the recommended battery swapping station information can be determined. For example, the vehicle to be subjected to battery swapping reserves battery swapping at the one battery swapping station, the user wants low cost of battery swapping, the battery swapping cost of the anther battery swapping station is low. Then, according to the battery swapping demand information of the one battery swapping station and the station information, such as the location information, of the another battery swapping station, the recommended battery swapping station information, such as the location information of the another battery swapping station, can be generated.

In the embodiments of the present application, by acquiring the battery swapping demand information of the one battery swapping station and the station information of the another battery swapping station, the resource information of the one battery swapping station or the another battery swapping station can be determined, and therefore, different demands of the users and operators for the one battery swapping station or another battery swapping station can be met as much as possible.

It is to be understood that in the various embodiments of the present application, the size of the serial number of the above-mentioned processes does not mean the order of implementation, and the order of implementation of each process is determined by its function and internal logic, and shall not constitute any limitation on the implementation of the embodiments of the present application.

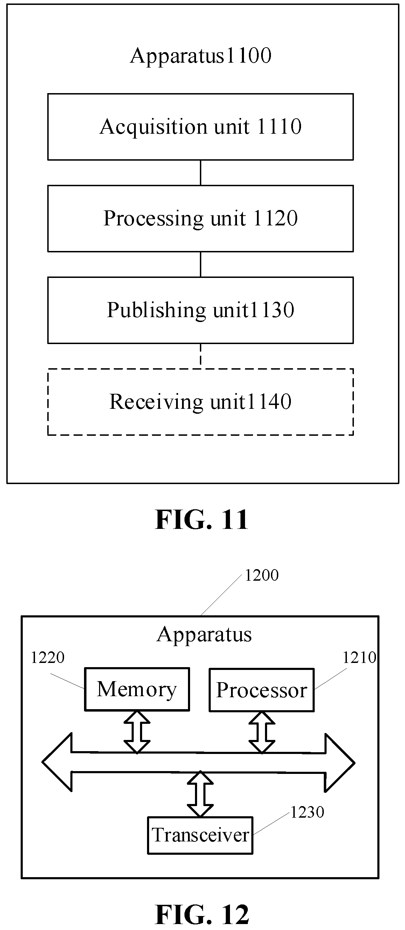

The method for publishing resource information in the embodiment of the present application is described in detail above, and an apparatus for publishing resource information in the embodiment of the present application will be described in detail below in conjunction with FIG. 11 and FIG. 12, and the technical features described in the method embodiment are applicable to the following apparatus embodiments.

FIG. 11 is a structural block diagram of an apparatus for publishing resource information provided by an embodiment of the present application.

FIG. 11 is a schematic block diagram of an apparatus 1100 for publishing resource information provided by an embodiment of the present application. As shown in FIG. 11, the apparatus includes part or all of the following contents.

An acquisition unit 1110 is configured to acquire battery swapping demand information of at least one battery swapping station and station information of the at least one battery swapping station;
a processing unit 1120 is configured to generate resource information according to the battery swapping demand information of the at least one battery swapping station and the station information of the at least one battery swapping station; and
a publishing unit 1130 is configured to publish the resource information.

In some embodiments of the present application, the battery swapping demand information of the at least one battery swapping station includes the demand information of vehicles to be subjected to battery swapping of the at least one battery swapping station, and the demand information includes at least one selected from the group consisting of: quantity information of batteries in demand, model information of the batteries in demand, SOC information of the batteries in demand, SOH information of the batteries in demand, capacity information of the batteries in demand or size information of the batteries in demand.

In some embodiments of the present application, the station information of the at least one battery swapping station includes at least one selected from the group consisting of: location information of the at least one battery swapping station, quantity information of the batteries of the at least one battery swapping station, model information of the batteries of the at least one battery swapping station, SOC information of the batteries of the at least one battery swapping station, SOH information of the batteries of the at least one battery swapping station, capacity information of the batteries of the at least one battery swapping station or size information of the batteries of the at least one battery swapping station.

In some embodiments of the present application, the acquisition unit 1110 is configured to acquire historical battery swapping information of the at least one battery swapping station; and the processing unit 1120 is configured to determine predicted battery swapping demand information of the at least one battery swapping station according to the historical battery swapping information.

In some embodiments of the present application, the acquisition unit 1110 is configured to acquire the information of queued vehicles to be subjected to battery swapping or information of queued batteries to be subjected to battery swapping of the at least one battery swapping station; and the processing unit 1120 is configured to: according to the information of the queued vehicles to be subjected to battery swapping or the information of the queued batteries to be subjected to battery swapping, determine real-time battery swapping demand information of the at least one battery swapping station.

In some embodiments of the present application, the acquisition unit 1110 is configured to acquire controller address of vehicles within a preset range of the at least one battery swapping station; and the processing unit 1120 is configured to determine the vehicles to be the queued vehicle to be subjected to battery swapping based on the controller address.

In some embodiments of the present application, the apparatus 1100 further includes: a receiving unit 1140 configured to receive battery swapping reservation request information of the at least one battery swapping station, in which, the request information includes information of reserved vehicles to be subjected to battery swapping or battery information of the reserved vehicles to be subjected to battery swapping; and the processing unit 1120 is configured to determine the battery swapping demand information in reservation of the at least one battery swapping station according to the request information.

In some embodiments of the present application, the resource information includes battery swapping waiting time information, recommended battery swapping time information, recommended battery swapping station information, battery swapping cost adjustment information or battery resource scheduling information.

In some embodiments of the present application, the publishing unit 1130 is configured to: transmit the battery swapping waiting time information of the at least one battery swapping station to the vehicles to be subjected to battery swapping, in which, the vehicles to be subjected to battery swapping include the queued vehicles to be subjected to battery swapping, the reserved vehicles to be subjected to battery swapping, historical battery swapping vehicles or registered vehicles of the at least one battery swapping station.

In some embodiments of the present application, the processing unit 1120 is configured to: according to the battery swapping demand information of the at least one battery swapping station and the station information of the at least one battery swapping station, determine time information corresponding to that the busyness of the at least one battery swapping station is less than or equal to a preset busyness threshold; and according to the time information corresponding to that the busyness of the at least one battery swapping station is less than the preset busyness threshold, generate the recommended battery swapping time information of the at least one battery swapping station.

In some embodiments of the present application, the publishing unit 1130 is configured to: transmit the recommended battery swapping time information of the at least one battery swapping station to the vehicles to be subjected to battery swapping, in which, the vehicles to be subjected to battery swapping include the queued vehicles to be subjected to battery swapping, the reserved vehicles to be subjected to battery swapping, historical battery swapping vehicles or registered vehicles of the at least one battery swapping station.

In some embodiments of the present application, the processing unit 1120 is configured to: according to the battery swapping demand information of the at least one battery swapping station and the station information of the at least one battery swapping station, determine the battery swapping expense information of the vehicle to be subjected to battery swapping at the at least one battery swapping station, in which, the battery swapping expense information includes the expense information of battery swapping time and the expense information of battery swapping cost; and generate the recommended battery swapping station information according to the battery swapping expense information.

In some embodiments of the present application, the recommended battery swapping station information includes the information of the battery swapping station with the minimum battery swapping time and/or the information of the battery swapping station with the minimum battery swapping cost.

In some embodiments of the present application, the publishing unit 1130 is configured to: transmit the recommended battery swapping station information to the vehicles to be subjected to battery swapping, in which, the vehicles to be subjected to battery swapping include the queued vehicles to be subjected to battery swapping, the reserved vehicles to be subjected to battery swapping, the historical battery swapping vehicles or the registered vehicles of the at least one battery swapping station.

In some embodiments of the present application, the processing unit 1120 is configured to: according to the battery swapping demand information of the at least one battery swapping station and the station information of the at least one battery swapping station, determine resource publishing information, in which, the resource publishing information includes a battery resource publishing thermodynamic chart of the at least one battery swapping station and/or the information of the busyness of the at least one battery swapping station; and generate the battery swapping cost adjustment information of the at least one battery swapping station according to the resource publishing information.

In some embodiments of the present application, the processing unit 1120 is configured to: under the condition that the busyness of the at least one battery swapping station is greater than or equal to the preset busyness threshold, determine to increase the battery swapping cost of the at least one battery swapping station.

In some embodiments of the present application, the processing unit 1120 is configured to: under the condition that the busyness of the at least one battery swapping station is less than or equal to the preset busyness threshold, determine to decrease the battery swapping cost of the at least one battery swapping station.

In some embodiments of the present application, the publishing unit 1130 is configured to: transmit battery swapping cost adjustment information of the at least one battery swapping station to the vehicles to be subjected to battery swapping, in which, the vehicles to be subjected to battery swapping include the queued vehicles to be subjected to battery swapping, the reserved vehicles to be subjected to battery swapping, the historical battery swapping vehicles or the registered vehicles of the at least one battery swapping station.

In some embodiments of the present application, the processing unit 1120 is configured to: according to the battery swapping demand information of the at least one battery swapping station and the station information of the at least one battery swapping station, determine the resource publishing information, in which, the resource publishing information includes the battery resource publishing thermodynamic chart of the at least one battery swapping station and/or the information of the busyness of the at least one battery swapping station; and generate battery resource scheduling information of the at least one battery swapping station according to the resource publishing information.

In some embodiments of the present application, the processing unit 1120 is configured to: under the condition that the busyness of the at least one battery swapping station is greater than or equal to the preset busyness threshold, determine to schedule the batteries of a target battery swapping station to the at least one battery swapping station, in which, the target battery swapping station includes the battery swapping station near the at least one battery swapping station.

In some embodiments of the present application, before determining to schedule the batteries of the target battery swapping station to the at least one battery swapping station, the processing unit 1120 is further configured to: according to station information of the at least one battery swapping station, determine distance information or running time information between the at least one battery swapping station and the battery swapping station near the at least one battery swapping station, in which, the station information of the at least one battery swapping station includes the location information of the at least one battery swapping station; and under the condition that the distance information is within the preset distance range or the running time information is within the preset time range, determine the battery swapping station nearby to be the target battery swapping station.

In some embodiments of the present application, the battery swapping demand information of the at least one battery swapping station and the station information of the at least one battery swapping station are the battery swapping demand information and the station information of the same battery swapping station.

In some embodiments, the battery swapping demand information of the at least one battery swapping station and the station information of the at least one battery swapping station are the battery swapping demand information and the station information of different battery swapping stations respectively.

It is to be understood that the above and other operations and/or functions of each module in the apparatus 1100 for publishing resource information are intended to implement the corresponding processes in the various methods shown in FIG. 2 to FIG. 10, and will not be listed here for the sake of brevity.

Optionally, an embodiment of the present application also provides a server, which includes the apparatus 1100 provided by each embodiment above.

FIG. 12 is a schematic block diagram of an apparatus 1200 for publishing resource information provided by an embodiment of the present application. As shown in FIG. 12, the apparatus 1200 includes a memory 1210 and a processor 1220, in which, the memory 1220 is configured to store instructions, and the processor 1210 is configured to read the instructions and implement the method provided by each embodiment of the present application.

The memory 1220 can be a device independent of the processor 1210 or integrated into the processor 1210.

Optionally, as shown in FIG. 12, the apparatus 1200 for resource scheduling of a battery swapping station resource may also include a transceiver 1230, and the processor 1210 can control the transceiver 1230 to communicate with other devices. Specifically, information or data may be transmitted to or received from other devices.

An embodiment of the present application further provides a computer storage medium for storing a computer program, and the computer program is used to perform the methods of various embodiments of the present application described above.

It should be understood that the processor of the embodiment of the present application may be an integrated circuit chip with signal processing capability. In implementation, each step of the above method embodiment can be completed by an integrated logic circuit of hardware in the processor or instructions in a form of software. The above-mentioned processor can be a general-purpose processor, a Digital Signal Processor (DSP), an Application Specific Integrated Circuit (ASIC), an Field-Programmable Gate Array (FPGA) or other programmable logic devices, discrete gate or transistor logic devices, discrete hardware components. All the methods, steps and logic block diagrams disclosed in the embodiment of the present application can be implemented or executed. The general purpose processor may be a microprocessor, or the processor may also be any conventional processor, etc. The steps of the method disclosed in conjunction with the embodiments of the present application can be directly embodied as being performed by the hardware decoding processor or being performed with a combination of hardware and software modules in the decoding processor. The software module may be located in a random access memory, a flash memory, a read-only memory, a programmable read-only memory, or an electrically erasable programmable memory, a register, or the like mature storage media in the art. The storage medium is located in the memory, and the processor reads the information in the memory and completes the steps of the aforementioned method in combination with the hardware thereof.

It is to be understood that in the embodiments of the present application, the memory can be a volatile memory or a non-volatile memory, or can include both the volatile memory and the non-volatile memory. The non-volatile memory may be a read-only memory (ROM), a programmable ROM (PROM), an erasable PROM (EPROM), an electrically erasable EPROM (EEPROM), or a flash memory. The volatile memory may be a Random Access Memory (RAM), which is used as an external cache. By way of example and not limitation, many forms of RAMs are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It is to be noted that the memories in the system and method described herein includes, but is not limited to, these and any other appropriate types of memory.

An embodiment of the present application also provides a computer-readable storage medium for storing computer programs.

Optionally, the computer-readable storage medium can be applied to the apparatus for publishing resource information in the embodiment of the present application; and with the computer program, a computer can perform corresponding processes implemented by the apparatus in the various methods in the embodiments of the present application, and for the sake of brevity, it will not be listed herein.

An embodiment of the present application also provides a computer program product which includes computer program instructions.

Optionally, the computer program product can be applied to the apparatus for publishing resource information in the embodiment of the present application; and with the computer program instructions, the computer can perform corresponding processes implemented by the apparatus for publishing resource information in the various methods in the embodiments of the present application, and for the sake of brevity, it will not be listed herein.

An embodiment of the present application also provides a computer programs.

Optionally, the computer program can be applied to the apparatus for publishing resource information in the embodiment of the present application, and when the computer program runs on the computer, a computer can perform corresponding process implemented by the apparatus for scheduling the resources of the battery swapping station in the various methods in the embodiment of the present application, and for the sake of brevity, it will not be listed herein.

Those of ordinary skill in the art may notice that the exemplary units and algorithm steps described with reference to the embodiments disclosed in this specification can be implemented in electronic hardware, or a combination of computer software and electronic hardware. Whether these functions are performed in hardware or software depends on a specific application and a design constraint condition of the technical solution. Those skilled in the art may implement the described functions using a different method for each particular application, but such implementation should not be considered beyond the scope of the present application.

Those skilled in the art can clearly understand that, for the convenience and brevity of description, the specific operating process of the system, apparatus, and unit described above may be obtained with reference to the corresponding process in the foregoing method embodiments, and description thereof will be omitted herein.

In the several embodiments provided in the present disclosure, it should be understood that the disclosed system, apparatus and method may be implemented in other manners. The apparatus embodiments described above are only illustrative. For example, dividing of units is only a kind of logical function dividing, and there may be other dividing modes in actual implementation. For example, the plurality of units or components can be combined or integrated into another system, or some features can be ignored or not executed. On the other hand, the shown or discussed mutual coupling or direct coupling or communication connection may be indirect coupling or communication connection through some interfaces, apparatuses, or units, and may be in electrical, mechanical, or in other forms.

The units described as separate components may or may not be physically separated, and components displayed as units may or may not be physical units, that is, may be located in one place, or may be published to a plurality of network units. Some or all of the units may be selected according to actual needs to achieve the purpose of the solution in this embodiment.

In addition, various functional units in various embodiments of the present application may be integrated into one processing unit, or various units may exist physically separately, or two or more units may be integrated into one unit.

If implemented in the form of a software functional unit and sold or used as an independent product, the function may be stored in a computer-readable storage medium. Based on this understanding, the essential part or the part that contributes to the related art of the technical solution of the present application or part of this technical solution can be embodied in the form of a software product. The computer software product is stored in a storage medium and includes several instructions to cause a computer device (which may be a personal computer, a server, a network device, or the like) to perform all or some of the steps of the method described in various embodiments of the present application. The aforementioned storage medium includes various media that can store program codes, such as a USB drive, mobile hard disk, ROM, RAM, magnetic disk or compact disc.

While the above description merely provides specific embodiments of the present application, the scope of protection of the present application is not limited to these embodiments. Any person skilled in the art can easily conceive of alterations or substitutions within the technical scope disclosed in the present application. All such alterations or substitutions shall fall within the scope of protection of the present application. Therefore, the scope of protection of the present application shall be defined by the scope of protection of the claims.

## Claims

1. A method for publishing resource information, comprising:
acquiring battery swapping demand information of at least one battery swapping station and station information of the at least one battery swapping station;
generating resource information according to the battery swapping demand information of the at least one battery swapping station and the station information of the at least one battery swapping station; and
publishing the resource information.

2. The method according to claim 1, wherein the battery swapping demand information of the at least one battery swapping station comprises the demand information of vehicles to be subjected to battery swapping of the at least one battery swapping station, and the demand information comprises at least one selected from the group consisting of: quantity information of batteries in demand, model information of the batteries in demand, SOC information of the batteries in demand, SOH information of the batteries in demand, capacity information of the batteries in demand or size information of the batteries in demand.

3. The method according to claim 1 or 2, wherein the station information of the at least one battery swapping station comprises at least one selected from the group consisting of: location information of the at least one battery swapping station, quantity information of the batteries of the at least one battery swapping station, model information of the batteries of the at least one battery swapping station, SOC information of the batteries of the at least one battery swapping station, SOH information of the batteries of the at least one battery swapping station, capacity information of the batteries of the at least one battery swapping station or size information of the batteries of the at least one battery swapping station.

4. The method according to any one of claims 1 to 3, comprising:
acquiring historical battery swapping information of the at least one battery swapping station; and
determining predicted battery swapping demand information of the at least one battery swapping station according to the historical battery swapping information.

5. The method according to any one of claims 1 to 4, comprising:
acquiring the information of queued vehicles to be subjected to battery swapping or information of queued batteries to be subjected to battery swapping of the at least one battery swapping station; and
according to the information of the queued vehicles to be subjected to battery swapping or the information of the queued batteries to be subjected to battery swapping, determining real-time battery swapping demand information of the at least one battery swapping station.

6. The method according to claim 5, comprising:
acquiring controller address of vehicles within a preset range of the at least one battery swapping station; and
determining the vehicles to be the queued vehicle to be subjected to battery swapping based on the controller address.

7. The method according to any one of claims 1 to 6, comprising:
receiving battery swapping reservation request information of the at least one battery swapping station, wherein the request information comprises information of reserved vehicles to be subjected to battery swapping or battery information of the reserved vehicles to be subjected to battery swapping; and
determining the battery swapping demand information in reservation of the at least one battery swapping station according to the request information.

8. The method according to any one of claims 1 to 7, wherein the resource information comprises battery swapping waiting time information, recommended battery swapping time information, recommended battery swapping station information, battery swapping cost adjustment information or battery resource scheduling information.

9. The method according to any one of claims 1 to 8, wherein the publishing the resource information comprises:
transmitting the battery swapping waiting time information of the at least one battery swapping station to the vehicles to be subjected to battery swapping, wherein the vehicles to be subjected to battery swapping comprise the queued vehicles to be subjected to battery swapping, the reserved vehicles to be subjected to battery swapping, historical battery swapping vehicles or registered vehicles of the at least one battery swapping station.

10. The method according to any one of claims 1 to 9, wherein the generating resource information according to the battery swapping demand information of the at least one battery swapping station and the station information of the at least one battery swapping station comprises:
according to the battery swapping demand information of the at least one battery swapping station and the station information of the at least one battery swapping station, determining time information corresponding to that the busyness of the at least one battery swapping station is less than or equal to a preset busyness threshold; and
according to the time information corresponding to that the busyness of the at least one battery swapping station is less than the preset busyness threshold, generating the recommended battery swapping time information of the at least one battery swapping station.

11. The method according to claim 10, wherein the publishing the resource information comprises:
transmitting the recommended battery swapping time information of the at least one battery swapping station to the vehicles to be subjected to battery swapping, wherein the vehicles to be subjected to battery swapping comprise the queued vehicles to be subjected to battery swapping, the reserved vehicles to be subjected to battery swapping, the historical battery swapping vehicles or the registered vehicles of the at least one battery swapping station.

12. The method according to any one of claims 1 to 11, wherein the generating resource information according to the battery swapping demand information of the at least one battery swapping station and the station information of the at least one battery swapping station comprises:
according to the battery swapping demand information of the at least one battery swapping station and the station information of the at least one battery swapping station, determining the battery swapping expense information of the vehicles to be subjected to battery swapping at the at least one battery swapping station, wherein the battery swapping expense information comprises the expense information of battery swapping time and the expense information of battery swapping cost; and
generating the recommended battery swapping station information according to the battery swapping expense information.

13. The method according to claim 12, wherein the recommended battery swapping station information comprises the information of the battery swapping station with the minimum battery swapping time and/or the information of the battery swapping station with the minimum battery swapping cost.

14. The method according to claim 12 or 13, wherein the publishing the resource information comprises:
transmitting the recommended battery swapping station information to the vehicles to be subjected to battery swapping, wherein the vehicles to be subjected to battery swapping comprise the queued vehicles to be subjected to battery swapping, the reserved vehicles to be subjected to battery swapping, the historical battery swapping vehicles or the registered vehicles of the at least one battery swapping station.

15. The method according to any one of claims 1 to 14, wherein the generating resource information according to the battery swapping demand information of the at least one battery swapping station and the station information of the at least one battery swapping station comprises:
according to the battery swapping demand information of the at least one battery swapping station and the station information of the at least one battery swapping station, determining resource publishing information, wherein the resource publishing information comprises a battery resource publishing thermodynamic chart of the at least one battery swapping station and/or the information of the busyness of the at least one battery swapping station; and
generating the battery swapping cost adjustment information of the at least one battery swapping station according to the resource publishing information.

16. The method according to claim 15, wherein the generating the battery swapping cost adjustment information of the at least one battery swapping station according to the resource publishing information comprises:
under the condition that the busyness of the at least one battery swapping station is greater than or equal to the preset busyness threshold, determining to increase the battery swapping cost of the at least one battery swapping station.

17. The method according to claim 15 or 16, wherein the generating the battery swapping cost adjustment information of the at least one battery swapping station according to the resource publishing information comprises:
under the condition that the busyness of the at least one battery swapping station is less than or equal to the preset busyness threshold, determining to decrease the battery swapping cost of the at least one battery swapping station.

18. The method according to any one of claims 15 to 17, wherein the publishing the resource information comprises:
transmitting battery swapping cost adjustment information of the at least one battery swapping station to the vehicles to be subjected to battery swapping, wherein the vehicles to be subjected to battery swapping comprise the queued vehicles to be subjected to battery swapping, the reserved vehicles to be subjected to battery swapping, the historical battery swapping vehicles or the registered vehicles of the at least one battery swapping station.

19. The method according to any one of claims 1 to 18, wherein the generating resource information according to the battery swapping demand information of the at least one battery swapping station and the station information of the at least one battery swapping station comprises:
according to the battery swapping demand information of the at least one battery swapping station and the station information of the at least one battery swapping station, determining the resource publishing information, wherein the resource publishing information comprises the battery resource publishing thermodynamic chart of the at least one battery swapping station and/or the information of the busyness of the at least one battery swapping station; and
generating battery resource scheduling information of the at least one battery swapping station according to the resource publishing information.

20. The method according to claim 19, wherein the generating battery resource scheduling information of the at least one battery swapping station according to the resource publishing information comprises:
under the condition that the busyness of the at least one battery swapping station is greater than or equal to the preset busyness threshold, determining to schedule the batteries of a target battery swapping station to the at least one battery swapping station, wherein the target battery swapping station comprises the battery swapping station near the at least one battery swapping station.

21. The method according to claim 20, wherein before determining to schedule the batteries of the target battery swapping station to the at least one battery swapping station, the method further comprises:
according to station information of the at least one battery swapping station, determining distance information or running time information between the at least one battery swapping station and the battery swapping station near the at least one battery swapping station, wherein the station information of the at least one battery swapping station comprises the location information of the at least one battery swapping station; and
under the condition that the distance information is within a preset distance range or the running time information is within a preset time range, determining the battery swapping station nearby to be the target battery swapping station.

22. The method according to any one of claims 1 to 8, wherein the battery swapping demand information of the at least one battery swapping station and the station information of the at least one battery swapping station are the battery swapping demand information and the station information of the same battery swapping station.

23. The method according to any one of claims 1 to 8, wherein the battery swapping demand information of at least one battery swapping station and the station information of the at least one battery swapping station are the battery swapping demand information and the station information of different battery swapping stations respectively.

24. An apparatus for publishing resource information, comprising:
an acquisition unit configured to acquire battery swapping demand information of at least one battery swapping station and station information of the at least one battery swapping station;
a processing unit configured to generate resource information according to the battery swapping demand information of the at least one battery swapping station and the station information of the at least one battery swapping station; and
a publishing unit configured to publish the resource information.

25. The apparatus according to claim 24, wherein the battery swapping demand information of the at least one battery swapping station comprises the demand information of vehicles to be subjected to battery swapping of the at least one battery swapping station, and the demand information comprises at least one selected from the group consisting of: quantity information of batteries in demand, model information of the batteries in demand, SOC information of the batteries in demand, SOH information of the batteries in demand, capacity information of the batteries in demand or size information of the batteries in demand.

26. The apparatus according to claim 24 or 25, wherein the station information of the at least one battery swapping station comprises at least one selected from the group consisting of: location information of the at least one battery swapping station, quantity information of the batteries of the at least one battery swapping station, model information of the batteries of the at least one battery swapping station, SOC information of the batteries of the at least one battery swapping station, SOH information of the batteries of the at least one battery swapping station, capacity information of the batteries of the at least one battery swapping station or size information of the batteries of the at least one battery swapping station.

27. The apparatus according to any one of claims 24 to 26, wherein
the acquisition unit is configured to acquire historical battery swapping information of the at least one battery swapping station; and
the processing unit is configured to determine predicted battery swapping demand information of the at least one battery swapping station according to the historical battery swapping information.

28. The apparatus according to any one of claims 24 to 27, wherein
the acquisition unit is configured to acquire the information of queued vehicles to be subjected to battery swapping or information of queued batteries to be subjected to battery swapping of the at least one battery swapping station; and
the processing unit is configured to: according to the information of the queued vehicles to be subjected to battery swapping or the information of the queued batteries to be subjected to battery swapping, determine real-time battery swapping demand information of the at least one battery swapping station.

29. The apparatus according to claim 28, wherein
the acquisition unit is configured to acquire controller address of vehicles within a preset range of the at least one battery swapping station; and
the processing unit is configured to determine the vehicles to be the queued vehicles to be subjected to battery swapping based on the controller address.

30. The apparatus according to any one of claims 24 to 29, further comprising:
a receiving unit configured to receive battery swapping reservation request information of the at least one battery swapping station, wherein the request information comprises information of reserved vehicles to be subjected to battery swapping or battery information of the reserved vehicles to be subjected to battery swapping; and
the processing unit is configured to determine the battery swapping demand information in reservation of the at least one battery swapping station according to the request information.

31. The apparatus according to any one of claims 24 to 30, wherein the resource information comprises battery swapping waiting time information, recommended battery swapping time information, recommended battery swapping station information, battery swapping cost adjustment information or battery resource scheduling information.

32. The apparatus according to any one of claims 24 to 31, wherein the publishing unit is configured to:
transmit the battery swapping waiting time information of the at least one battery swapping station to the vehicles to be subjected to battery swapping, wherein the vehicles to be subjected to battery swapping comprise the queued vehicles to be subjected to battery swapping, the reserved vehicles to be subjected to battery swapping, historical battery swapping vehicles or registered vehicles of the at least one battery swapping station.

33. The apparatus according to any one of claims 24 to 32, wherein the processing unit is configured to:
according to the battery swapping demand information of the at least one battery swapping station and the station information of the at least one battery swapping station, determine time information corresponding to that the busyness of the at least one battery swapping station is less than or equal to a preset busyness threshold; and
according to the time information corresponding to that the busyness of the at least one battery swapping station is less than the preset busyness threshold, generate the recommended battery swapping time information of the at least one battery swapping station.

34. The apparatus according to claim 33, wherein the publishing unit is configured to:
transmit the recommended battery swapping time information of the at least one battery swapping station to the vehicles to be subjected to battery swapping, wherein the vehicles to be subjected to battery swapping comprise the queued vehicles to be subjected to battery swapping, the reserved vehicles to be subjected to battery swapping, the historical battery swapping vehicles or the registered vehicles of the at least one battery swapping station.

35. The apparatus according to any one of claims 24 to 34, wherein the processing unit is configured to:
according to the battery swapping demand information of the at least one battery swapping station and the station information of the at least one battery swapping station, determine the battery swapping expense information of the vehicles to be subjected to battery swapping at the at least one battery swapping station, wherein the battery swapping expense information comprises the expense information of battery swapping time and the expense information of battery swapping cost; and
generate the recommended battery swapping station information according to the battery swapping expense information.

36. The apparatus according to claim 35, wherein the recommended battery swapping station information comprises the information of the battery swapping station with the minimum battery swapping time and/or the information of the battery swapping station with the minimum battery swapping cost.

37. The apparatus according to claim 35 or 36, wherein the publishing unit is configured to:
transmit the recommended battery swapping station information to the vehicles to be subjected to battery swapping, wherein the vehicles to be subjected to battery swapping comprise the queued vehicles to be subjected to battery swapping, the reserved vehicles to be subjected to battery swapping, the historical battery swapping vehicles or the registered vehicles of the at least one battery swapping station.

38. The apparatus according to any one of claims 24 to 37, wherein the processing unit is configured to:
according to the battery swapping demand information of the at least one battery swapping station and the station information of the at least one battery swapping station, determine resource publishing information, wherein the resource publishing information comprises a battery resource publishing thermodynamic chart of the at least one battery swapping station and/or the information of the busyness of the at least one battery swapping station; and
generate the battery swapping cost adjustment information of the at least one battery swapping station according to the resource publishing information.

39. The apparatus according to claim 38, wherein the processing unit is configured to:
under the condition that the busyness of the at least one battery swapping station is greater than or equal to the preset busyness threshold, determine to increase the battery swapping cost of the at least one battery swapping station.

40. The apparatus according to claim 38 or 39, wherein the processing unit is configured to:
under the condition that the busyness of the at least one battery swapping station is less than or equal to the preset busyness threshold, determine to decrease the battery swapping cost of the at least one battery swapping station.

41. The apparatus according to any one of claims 38 to 40, wherein the publishing unit is configured to:
transmit battery swapping cost adjustment information of the at least one battery swapping station to the vehicles to be subjected to battery swapping, wherein the vehicles to be subjected to battery swapping comprise the queued vehicles to be subjected to battery swapping, the reserved vehicles to be subjected to battery swapping, the historical battery swapping vehicles or the registered vehicles of the at least one battery swapping station.

42. The apparatus according to any one of claims 24 to 41, wherein the processing unit is configured to:
according to the battery swapping demand information of the at least one battery swapping station and the station information of the at least one battery swapping station, determine the resource publishing information, wherein the resource publishing information comprises the battery resource publishing thermodynamic chart of the at least one battery swapping station and/or the information of the busyness of the at least one battery swapping station; and
generate battery resource scheduling information of the at least one battery swapping station according to the resource publishing information.

43. The apparatus according to claim 42, wherein the processing unit is configured to:
under the condition that the busyness of the at least one battery swapping station is greater than or equal to the preset busyness threshold, determine to schedule the batteries of a target battery swapping station to the at least one battery swapping station, wherein the target battery swapping station comprises the battery swapping station near the at least one battery swapping station.

44. The apparatus according to claim 43, wherein before determining to schedule the batteries of the target battery swapping station to the at least one battery swapping station, the processing unit is further configured to:
according to station information of the at least one battery swapping station, determine distance information or running time information between the at least one battery swapping station and the battery swapping station near the at least one battery swapping station, wherein the station information of the at least one battery swapping station comprises the location information of the at least one battery swapping station; and
under the condition that the distance information is within a preset distance range or the running time information is within a preset time range, determine the battery swapping station nearby to be the target battery swapping station.

45. The apparatus according to any one of claims 24 to 31, wherein the battery swapping demand information of the at least one battery swapping station and the station information of the at least one battery swapping station are the battery swapping demand information and the station information of the same battery swapping station.

46. The apparatus according to any one of claims 24 to 31, wherein the battery swapping demand information of at least one battery swapping station and the station information of the at least one battery swapping station are the battery swapping demand information and the station information of different battery swapping stations respectively.

47. An apparatus for scheduling battery swapping station resources, comprising a memory and a processor, wherein the memory is configured to store instructions, and the processor is configured to read the instructions and implement the method according to any one of claims 1 to 23 according to the instructions.

48. A server, comprising the apparatus according to any one of claims 24 to 47.
